(19) Europäisches Patentamt
European Patent Office
Office européen des brevets

(11) **EP 4 647 948 A1**

(12) **EUROPEAN PATENT APPLICATION**

(43) Date of publication:
**12.11.2025 Bulletin 2025/46**

(21) Application number: **25174548.5**

(22) Date of filing: **06.05.2025**

(51) International Patent Classification (IPC):
***G06F 21/53*** *(2013.01)*

(52) Cooperative Patent Classification (CPC):
**G06F 21/53; G06F 21/57; G06F 21/602;**
H04L 9/008; H04L 2209/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.05.2024 CN 202410551418**

(71) Applicant: **Alipay (Hangzhou) Information
Technology Co., Ltd.**
**Hangzhou, Zhejiang 310000 (CN)**

(72) Inventors:
• **XU, Jiming**
**Hangzhou, Zhejiang, 310000 (CN)**
• **CAO, Lin**
**Hangzhou, Zhejiang, 310000 (CN)**
• **LI, Chao**
**Hangzhou, Zhejiang, 310000 (CN)**
• **WU, Peng**
**Hangzhou, Zhejiang, 310000 (CN)**

(74) Representative: **Fish & Richardson P.C.**
**Highlight Business Towers**
**Mies-van-der-Rohe-Straße 8**
**80807 München (DE)**

(54) **METHODS AND SYSTEMS FOR IMPLEMENTING CONFIDENTIAL COMPUTING, ELECTRONIC DEVICES, AND STORAGE MEDIA**

(57) This specification provides methods and systems for implementing confidential computing, electronic devices, and storage media. The method can include: scrambling encrypted data based on a ciphertext scrambling function in a trusted execution environment, and sending scrambled encrypted data to a GPU, so that the GPU processes the scrambled encrypted data by using a target white-box decryption combined function, and obtains, through computing, a corresponding computing result by using obtained processed data, where the target white-box decryption combined function is used to perform ciphertext descrambling processing, decryption processing, and first data protection processing on the scrambled encrypted data; and obtaining the computing result or a derived result of the computing result, and performing processing in the trusted execution environment to obtain a plaintext computing result.

S202

Scramble encrypted data based on a ciphertext scrambling function in a trusted execution environment, and send scrambled encrypted data to a GPU, so that the GPU processes the scrambled encrypted data by using a target white-box decryption combined function, and obtains, through computing, a corresponding computing result by using obtained processed data, where the target white-box decryption combined function is used to perform ciphertext descrambling processing, decryption processing, and first data protection processing on the scrambled encrypted data

S204

Obtain the computing result or a derived result of the computing result, and perform processing in the trusted execution environment to obtain a plaintext computing result

FIG. 2

EP 4 647 948 A1

**Description**

**TECHNICAL FIELD**

This specification relates to the field of privacy computing technologies, and in particular, to methods and systems for implementing confidential computing, electronic devices, and storage media.

**BACKGROUND**

Confidential computing can provide data protection for data and ensure data security during data use. Scenarios such as multi-party computing and a public cloud require confidential computing. A trusted execution environment (TEE) is a way of implementing confidential computing. The TEE can serve as a black box in hardware. Code and data operations performed in the TEE cannot be peered by a system layer. Only an interface predefined in code can be used to operate on the code. In some confidential computing scenarios such as a large model, there is a need for high power. In a related technology, it is proposed to use a graphics processing unit (GPU) to meet a high power need. The GPU has a high parallel computing capability, and can process a large amount of data at the same time. Therefore, how to combine the GPU with the TEE, so as to expand a security boundary of the TEE to the GPU is one of main research directions of confidential computing.

**SUMMARY**

In view of this, this specification provides methods and systems for implementing confidential computing, electronic devices, and storage media, to reduce disadvantages in a related technology.

Specifically, this specification is implemented by using the following technical solutions.

According to a first aspect of embodiments of this specification, a method for implementing confidential computing is provided. The method includes the following: scrambling encrypted data based on a ciphertext scrambling function in a trusted execution environment, and sending scrambled encrypted data to a GPU, so that the GPU processes the scrambled encrypted data by using a target white-box decryption combined function, and obtains, through computing, a corresponding computing result by using obtained processed data, where the target white-box decryption combined function is used to perform ciphertext descrambling processing, decryption processing, and first data protection processing on the scrambled encrypted data; and obtaining the computing result or a derived result of the computing result, and performing processing in the trusted execution environment to obtain a plaintext computing result.

According to a second aspect of embodiments of this specification, a method for implementing confidential computing is provided. The method includes the following: obtaining scrambled encrypted data from a trusted execution environment and a target computing function for the scrambled encrypted data, where the scrambled encrypted data are obtained by scrambling encrypted data based on a ciphertext scrambling function in the trusted execution environment; processing the scrambled encrypted data by using a target white-box decryption combined function, and running the target computing function for obtained processed data to obtain a corresponding computing result, where the target white-box decryption combined function is used to perform ciphertext descrambling processing, decryption processing, and first data protection processing on the scrambled encrypted data; and returning the computing result or a derived result of the computing result to the trusted execution environment for processing in the trusted execution environment to obtain a plaintext computing result.

According to a third aspect of embodiments of this specification, a system for implementing confidential computing is provided, including a trusted execution environment and a GPU.

The trusted execution environment is used to: scramble encrypted data based on a ciphertext scrambling function, send scrambled encrypted data to the GPU, obtain a computing result or a derived result of the computing result from the GPU, and process the computing result or the derived result of the computing result to obtain a plaintext computing result.

The GPU is configured to: process the scrambled encrypted data by using a target white-box decryption combined function, obtain, through computing, the corresponding computing result by using obtained processed data, and return the computing result or the derived result of the computing result to the trusted execution environment, where the target white-box decryption combined function is used to perform ciphertext descrambling processing, decryption processing, and first data protection processing on the scrambled encrypted data.

According to a fourth aspect of embodiments of this specification, a method for implementing confidential computing is provided. The method includes the following: scrambling encrypted data based on a ciphertext scrambling function in a trusted execution environment, and sending scrambled encrypted data to a GPU, so that the GPU processes the scrambled encrypted data by using a confidential computing combined function, to obtain a corresponding computing result, where the confidential computing combined function is used to perform ciphertext descrambling processing, decryption processing, first data protection processing, and computing processing on the scrambled encrypted data; and obtaining the computing result or a derived result of the computing result, and performing processing in the trusted execution environment to obtain a plaintext computing result.

According to a fifth aspect of embodiments of this specification, a method for implementing confidential computing is provided. The method includes the following: obtaining scrambled encrypted data from a trusted execution environment, where the scrambled encrypted data are obtained by scrambling encrypted data based on a ciphertext scrambling function in the trusted execution environment; processing the scrambled encrypted data by using a confidential computing combined function, to obtain a corresponding computing result, where the confidential computing combined function is used to perform ciphertext descrambling processing, decryption processing, first data protection processing, and computing processing on the scrambled encrypted data; and returning the computing result or a derived result of the computing result to the trusted execution environment for processing in the trusted execution environment to obtain a plaintext computing result.

According to a sixth aspect of embodiments of this specification, a system for implementing confidential computing is provided, including a trusted execution environment and a GPU.

The trusted execution environment is used to: scramble encrypted data based on a ciphertext scrambling function, send scrambled encrypted data to the GPU, obtain a computing result or a derived result of the computing result from the GPU, and process the computing result or the derived result of the computing result to obtain a plaintext computing result.

The GPU is configured to: process the scrambled encrypted data by using a confidential computing combined function to obtain the corresponding computing result, and return the computing result or the derived result of the computing result to the trusted execution environment, where the confidential computing combined function is used to perform ciphertext descrambling processing, decryption processing, first data protection processing, and computing processing on the scrambled encrypted data.

According to a seventh aspect of embodiments of this specification, an apparatus for implementing confidential computing is provided, including: a processor; and a memory configured to store processor-executable instructions.

The processor runs the executable instructions to implement the method for implementing confidential computing according to any one of the first aspect, the second aspect, the fourth aspect, or the fifth aspect.

According to an eighth aspect of embodiments of this specification, a computer-readable storage medium is provided. The computer-readable storage medium stores computer instructions, and when the instructions are executed by a processor, the steps of the method for implementing confidential computing according to any one of the first aspect, the second aspect, the fourth aspect, or the fifth aspect are implemented.

According to a ninth aspect of embodiments of this specification, a computer program product is provided, including a computer program and/or instructions. When the computer program and/or the instructions are executed by a processor, the steps of the method for implementing confidential computing according to any one of the first aspect, the second aspect, the fourth aspect, or the fifth aspect are implemented.

In the technical solutions provided in this specification, encrypted data are scrambled in a trusted execution environment, and scrambled encrypted data are sent to a GPU. In this process, a layer of algorithm-level protection is added to the encrypted data by using a scrambling operation, to improve security of the scrambled encrypted data when the scrambled encrypted data are transmitted to the GPU. After receiving the scrambled encrypted data, the GPU processes the scrambled encrypted data by using a target white-box decryption combined function to obtain processed data. The target white-box decryption combined function is used to perform ciphertext descrambling processing, decryption processing, and first data protection processing on the scrambled encrypted data. An effect of processing the scrambled encrypted data by using the target white-box decryption combined function is equivalent to that of performing the first data protection processing on raw data (namely, plaintext data) corresponding to the encrypted data, that is, the processed data are data with data protection. In a process in which the GPU executes a computing task, the GPU can obtain only the processed data processed by using the target white-box decryption combined function, and cannot obtain the raw data. This effectively improves security of the raw data in the computing process. In addition, because the target white-box decryption combined function is formed by a plurality of hybrid functions, even if an attacker steals the target white-box decryption combined function, the attacker cannot decipher the plurality of hybrid functions and an original key based on the target white-box decryption combined function, and cannot decipher the raw data corresponding to the encrypted data. Because the processed data have a data protection solution, a computing result or a derived result of the computing result also has a data protection solution to an extend. The protected computing result or the derived result of the computing result is returned to the trusted execution environment, so that security in a data transmission process can be ensured. Then, the computing result or the derived result of the computing result is processed in the trusted execution environment to obtain a plaintext computing result.

It can be determined that in the technical solutions provided in this specification, plaintext data exist only in the trusted execution environment. In a data transmission process and a computing process, there are specific data protection measures to protect data. In this way, security of confidential computing is greatly improved, and a security boundary of the TEE is expanded to the GPU.

It should be understood that the above-mentioned general descriptions and the following detailed descriptions are merely used as examples and for explanation, and are not intended to limit this specification.

## BRIEF DESCRIPTION OF DRAWINGS

To describe the technical solutions in embodiments of this specification or in the conventional technology more clearly, the following briefly describes the accompanying drawings needed for describing embodiments or the conventional technology. Clearly, the accompanying drawings in the following description merely show some embodiments of this specification, and a person of ordinary skill in the art can still derive other drawings from these accompanying drawings, where

FIG. 1a and FIG. 1b are schematic diagrams of an architecture of a scenario for implementing confidential computing, according to an example embodiment of this specification;

FIG. 2 is a schematic flowchart of a method for implementing confidential computing, according to an example embodiment of this specification;

FIG. 3 is a schematic flowchart of a method for implementing confidential computing, according to an example embodiment of this specification;

FIG. 4 is a schematic diagram of an interaction procedure for implementing confidential computing, according to an example embodiment of this specification;

FIG. 5a and FIG. 5b are schematic diagrams of a framework of a system for implementing confidential computing, according to an example embodiment of this specification;

FIG. 6 is a schematic flowchart of another method for implementing confidential computing, according to an example embodiment of this specification;

FIG. 7 is a schematic flowchart of another method for implementing confidential computing, according to an example embodiment of this specification; and

FIG. 8 to FIG. 11 are block diagrams of an apparatus for implementing confidential computing, according to an example embodiment of this specification.

## DESCRIPTION OF EMBODIMENTS

Example embodiments are described here in detail, and examples are shown in the accompanying drawings. When the following descriptions relate to the accompanying drawings, unless specified otherwise, same numbers in different accompanying drawings represent same or similar elements. Implementations described in the following example embodiments do not represent all implementations consistent with this specification. On the contrary, the implementations are merely examples of apparatuses and methods that are consistent with some aspects of this specification.

It should be noted that, in another embodiment, steps of a corresponding method are not necessarily performed based on an order shown and described in this specification. In some other embodiments, the method can include more or fewer steps than those described in this specification. In addition, a single step described in this specification may be broken down into a plurality of steps for description in another embodiment, and a plurality of steps described in this specification may be combined into a single step for description in another embodiment. It should be understood that although terms "first", "second", "third", etc. may be used in this specification to describe various types of information, the information is not limited to the terms. These terms are used merely to differentiate information of the same type. For example, without departing from the scope of this specification, first information can also be referred to as second information. Similarly, second information can also be referred to as first information. Depending on the context, the term "if" used here can be interpreted as "when" or "in response to determining".

User information (including but not limited to user equipment information, personal information of a user, etc.) and data (including but not limited to data used for analysis, stored data, displayed data, etc.) used in this specification are information and data that are authorized by the user or fully authorized by each party, related data need to be collected, used, and processed by abiding by related laws and regulations and standards of a related country and region, and a corresponding operation entry is provided, so that the user chooses to perform authorization or rejection.

Some embodiments of this specification are described in detail below.

As mentioned above, in a related technology, it is desirable to combine a TEE with a GPU to transfer a computing task from the TEE to the GPU, so as to fully utilize a high parallel computing capability of the GPU, thereby satisfying a high computing power need. Specifically, there are a plurality of cooperation solutions between the TEE and the GPU based on different implementations of the TEE on a host.

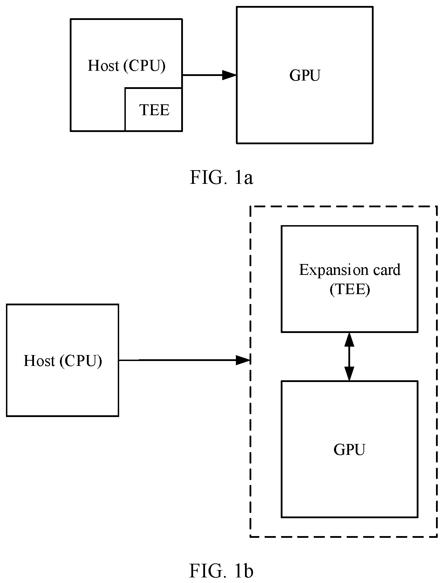

For example, the TEE can be constructed by a device body of the host, for example, the TEE is constructed by a CPU on the device body. In this case, as shown in the diagram of an architecture of a scenario in which a TEE and a GPU are combined in FIG. 1a, the TEE can be considered as a security expansion based on CPU hardware of the host. On this basis, the TEE can implement data interaction with the GPU inserted into the device body, so that the computing task can be transferred from the TEE to the GPU for processing.

For another example, in some scenarios, a user cannot trust a TEE environment constructed by the host. For example, in a cloud computing scenario, the host is a virtual host provided by a cloud service provider, and the TEE is generated and managed by the cloud service provider. Because whether the cloud service provider is trusted is not determined, the user cannot trust the TEE environment of the host. Therefore, the TEE can be constructed by an expansion apparatus outside the device body of the host, for example, the TEE is constructed by an expansion card inserted into the device body. In this case, as shown in the diagram of an architecture of a scenario in which an expansion card and a GPU are combined in FIG. 1b, the TEE environment is encapsulated into an expansion card trusted by the user, so that security considerations of the user can be met, and the expansion card can be inserted into different devices for use, to help improve flexibility. Further, in the scenario shown in FIG. 1b, there can be two ways of combination between the expansion card and the GPU: (1) The expansion card is inserted into the device body of the host, for example, is inserted into a PCIE bus in the device body, and the GPU is mounted on the expansion card in a form of a subcard. (2) Both the GPU and the expansion card are inserted into the device body of the host. For example, both the GPU and the expansion card can be inserted into the PCIE bus in the device body.

However, in a process of performing communication between the TEE and the GPU, there is a risk of being eavesdropped by using software, a probe logic analyzer, etc., and data security is greatly reduced. Therefore, the technical solutions provided in this specification is to reduce security risks existing in the above-mentioned scenarios in which the GPU and the TEE are combined, expand a security boundary of the TEE to the GPU, ensure data security in a computing process, and implement high-power confidential computing.

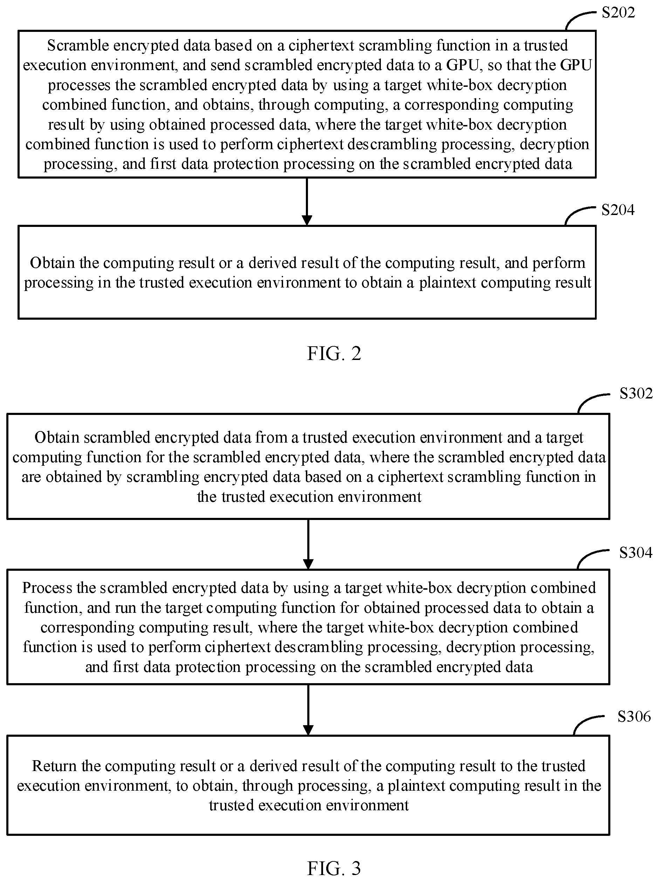

FIG. 2 is a schematic flowchart of a method for implementing confidential computing, according to an example embodiment of this specification. The method can be applied to a trusted execution environment. The trusted execution environment can be constructed based on software and hardware. For example, hardware used to construct the trusted execution environment can include an expansion card inserted into a device body of a host, or a processor and a memory that are mounted on the device body of the host. In a technical solution of this embodiment, a GPU is further mounted on the host.

In some embodiments, when the trusted execution environment is constructed based on the expansion card inserted into the device body of the host, the expansion card is encapsulated with the trusted execution environment. Therefore, the expansion card is inserted into the device body of the host, and a TEE of the expansion card can implement data interaction with the GPU inserted into the device body of the host.

When the trusted execution environment is constructed based on the processor mounted on the device body of the host, a CPU of the host constructs the trusted execution environment. In this case, it can be considered that the TEE is a secure expansion based on CPU hardware of the host. Currently, the industry attaches great importance to a TEE solution. Almost all mainstream chips and software alliances have their TEE solutions, such as a trusted platform module (TPM) in software and an Intel SGX, an ARM Trustzone (trust zone), and an AMD platform security processor (PSP) in hardware. The Intel SGX technology is used as an example. The SGX provides an enclave (enclave), that is, an encrypted trusted execution area in a memory, and a CPU prevents data from being stolen. The CPU can allocate a part of the area enclave page cache (EPC) in the memory by using newly added processor instructions, and encrypt data in the EPC by using an encryption engine memory encryption engine (MEE) in the CPU. Encrypted content in the EPC is decrypted to a plaintext only after the CPU is entered. Therefore, in the SGX, a user can distrust an operating system, a virtual machine monitor (VMM), or even a basic input/output system (BIOS), and only need to trust the CPU to ensure that the privacy data are not divulged. Therefore, the enclave is equivalent to the TEE generated in the SGX technology.

Refer to FIG. 2. The method for implementing confidential computing described in this specification can include the following steps.

S202: Scramble encrypted data based on a ciphertext scrambling function in the trusted execution environment, and send scrambled encrypted data to the GPU, so that the GPU processes the scrambled encrypted data by using a target white-box decryption combined function, and obtains, through computing, a corresponding computing result by using obtained processed data, where the target white-box decryption combined function is used to perform ciphertext descrambling processing, decryption processing, and first data protection processing on the scrambled encrypted data.

The encrypted data can be obtained by encrypting raw data by using a key. This specification does not impose a limitation on a key, an encryption algorithm/function/solution, or an encryption party (performing an encryption operation) related in an encryption process. For example, the raw data can be encrypted by using the key in the trusted execution environment to obtain the encrypted data. For another example, the encrypted data can be obtained from an external environment other than the trusted execution environment. For example, the encrypted data come from a data sender. The data sender needs to perform confidential computing, and can be the user or another device that can send data. The data sender encrypts the raw data by using the key, and sends the encrypted data to the trusted execution environment.

Before transmitting the encrypted data to the trusted execution environment, the data sender needs to confirm that the TEE is authentic and trustworthy. For example, a remote verification mechanism is used to confirm whether the TEE is authentic and trustworthy. In some embodiments, for the remote verification mechanism, references can be made to the Intel SGX technology. For example, the TEE is constructed based on the expansion card. When a certain data sender expects to verify a certain enclave in the expansion card, the to-be-verified enclave first generates a configuration file deployed in the to-be-verified enclave into a Report. For example, the Report can include a hash value of the configuration file deployed in the to-be-verified enclave. Then, the to-be-verified enclave obtains a remotely verifiable Quote by using a local authentication mechanism. Specifically, the Report can be signed by a special enclave, referred to as Quoting Enclave (QE), on the expansion card by using an asymmetric key deployed in the expansion card, to generate the remotely verifiable Quote, and the expansion card sends the Quote to the data sender. The above-mentioned asymmetric key is burned into the expansion card in a production process, asymmetric keys burned into different expansion cards are completely different, and public keys corresponding to various asymmetric keys are uniformly maintained at an Intel attestation server (IAS). Therefore, the data sender needs to further send the Quote provided by the expansion card to the IAS, and the IAS verifies a signature included in the Quote, to determine validity of an SGX platform on the expansion card, and feed back a determining result to the data sender. If the determining result indicates that the SGX platform on the expansion card is valid, the data sender can further verify the Report included in the Quote. For example, a hash value included in the Report is compared with a hash value corresponding to a standard configuration file held by the data sender. If the hash values are consistent, the data sender can determine that the standard configuration file is correctly configured in the to-be-verified enclave of the expansion card, that is, the to-be-verified enclave is successfully verified remotely. In addition, notably, it is only an example to complete the remote verification mechanism with assistance of the IAS. In a practice process of the technical solutions of this specification, the remote verification mechanism can alternatively be completed with assistance of another server. That is, public keys corresponding to asymmetric keys burned in different expansion cards can be uniformly maintained in another server, and the another server verifies a signature included in the Quote, and returns a determining result of validity to the data sender. This is not limited in this specification.

In some embodiments, the encrypted data can be obtained by the data sender by encrypting the raw data based on a shared key negotiated by the data sender and the trusted execution environment. When the trusted execution environment is successfully verified remotely, the data sender can perform key negotiation with the trusted execution environment. For example, it is assumed that the raw data are p. The trusted execution environment and the data sender agree on a symmetric encryption algorithm (including encryption function E and decryption function D) and a shared key k of a current computing task. The data sender encrypts the raw data by using encryption function E and the symmetric key k to obtain encrypted data $c_1$ ($c_1 = E_k(p)$), and transmits the encrypted data to the trusted execution environment. When obtaining a plaintext computing result of the current computing task, the trusted execution environment can encrypt the plaintext computing result based on encryption function E and the shared key k, and return an encrypted computing result to the data sender, so that the data sender decrypts the encrypted computing result based on decryption function D and the shared key k, to obtain the plaintext computing result.

In some embodiments, the encrypted data and the encrypted computing result are transmitted between the trusted execution environment and the data sender, and plaintext data are displayed only in the trusted execution environment. This helps improve security of the plaintext data in a confidential computing process. In addition, each time a computing task is executed, a key negotiation can be performed between the data sender and the trusted execution environment, so that raw data of the current computing task is encrypted based on a shared key of the current computing task (that is, shared keys corresponding to different computing tasks are different). In this way, security of confidential computing can be further improved by improving a difficulty of deciphering the shared key.

After the encrypted data are transmitted to the trusted execution environment, the encrypted data can be scrambled by using a ciphertext scrambling function. A scrambling operation is used to further transform the encrypted data, so that statistical characteristic of the encrypted data can be more random, and a rule, for example, a continuous same bit string and a repetition pattern, that may exist in the encrypted data can be eliminated, to increase difficulty in cryptanalysis. Even if an attacker steals scrambled encrypted data in a non-TEE environment (for example, in a process of transmitting to the GPU), the encrypted data cannot be easily inferred, and the raw data cannot be easily inferred. The ciphertext scrambling function can be generated in the trusted execution environment. For example, a random number sequence is generated in the trusted execution environment (randomness of the random number sequence needs to be ensured by using a secure random number), and bijective function F is generated based on the random number sequence. Bijective function F can be used as the ciphertext scrambling function. For a specific generation process of a bijective function, references can be made to related content of the bijective function in the related technology. Details are omitted here for simplicity. Encrypted data $c_1$ are scrambled by using ciphertext scrambling function F, to obtain scrambled encrypted data $c_1'$.

After receiving scrambled encrypted data $c_1'$, the GPU processes the scrambled encrypted data by using the target white-box decryption combined function. The white-box decryption combined function belongs to a white-box cryptography. The white-box cryptography is a special data protection method that can be used to defend against an attack in a white-box environment. Because a general-purpose GPU lacks a hardware-level password security device like a trusted hardware root, the white-box cryptography becomes an important cryptographic algorithm component for establishing an encrypted communication protocol between the TEE and the GPU. A core idea of the white-box cryptography is obfuscation, that is, a conventional encryption algorithm is deeply fused with an original key, and a real form of the original key is hidden by using various coding techniques and mathematical transformation, so that the attacker cannot directly extract the original key or derive a decryption process even if the attacker can access, modify, or even control code execution, to protect the original key.

In some embodiments, the target white-box decryption combined function is used to perform ciphertext descrambling processing, decryption processing, and first data protection processing on the scrambled encrypted data. To implement effects of the plurality of types of data processing, the target white-box decryption combined function can be obtained by combining a plurality of functions. For example, the target white-box decryption combined function can include a ciphertext descrambling function corresponding to the ciphertext scrambling function, a first data protection function, and a decryption function used to decrypt encrypted data $c_1$. The ciphertext descrambling function is used to implement ciphertext descrambling processing, the decryption function is used to implement decryption processing, and the first data protection function is used to implement first data protection processing. When the scrambled encrypted data are processed **by using** the target white-box decryption combined function, an input of the combined function is the scrambled encrypted data, and an output is the processed data. Therefore, in a process of executing a computing task by the GPU, the GPU can only obtain the processed data, and cannot obtain the raw data corresponding to the encrypted data. This greatly improves security and confidentiality of the raw data in a computing process.

Any combined function usually has a specific function execution order. For example, with reference to the above-mentioned embodiments, the encryption function is function E, the decryption function is function D, the ciphertext scrambling function is function F, the ciphertext descrambling function can be represented as function $F^{-1}$, the first data protection function is function G, and the shared key is a key k (namely, the original key). In this case, the target white-box decryption combined function can be represented as $D_k' = G \circ D_k \circ F^{-1}$, where $\circ$ represents a combined relationship between functions. Function execution logic inside the target white-box decryption combined function can be understood as follows:

first performing ciphertext descrambling processing on scrambled encrypted data $c_1'$ by using ciphertext scrambling function $F^{-1}$, to obtain the encrypted data; then decrypting the encrypted data by using decryption function $D_k$, to obtain the raw data corresponding to the encrypted data; and then performing first data protection processing on the raw data by using first data protection function G, to obtain the processed data. It can be determined that an effect of processing the scrambled encrypted data by using the target white-box decryption combined function is equivalent to that of performing, by using the first data protection function, the first data protection processing on the raw data corresponding to the encrypted data.

In some embodiments, as described above, the first data protection processing is performing data protection on the raw data corresponding to the encrypted data, and a data protection idea can be divided into scrambling and encryption.

For different to-be-processed data, scrambling processing can be divided into plaintext scrambling processing and ciphertext scrambling processing. If the to-be-processed data are plaintext data, plaintext scrambling processing is used. If the to-be-processed data are ciphertext data, ciphertext scrambling processing is used. Plaintext scrambling processing can be implemented by using a plaintext scrambling function, and ciphertext scrambling processing can be implemented by using a ciphertext scrambling function. It can be determined from the above-mentioned function execution logic of the target white-box decryption combined function that the raw data processed by the first data protection processing are plaintext data. Therefore, the plaintext scrambling function can be selected as the first data protection function, to implement the first data protection processing. Similar to the above-mentioned generation process of ciphertext scrambling function F, a random number sequence can be generated in the trusted execution environment (randomness of the sequence needs to be ensured by using a secure random number), and bijective function G is generated based on the random number sequence. Bijective function G can be used as the plaintext scrambling function (namely, the first data protection function). Because the bijective function features injective, surjective, and linear independent, when the bijective function is used as a scrambling function, uniquely determined descrambling data can be obtained by descrambling the scrambled data by using a descrambling function corresponding to the scrambling function subsequently, to avoid an error in a computing process.

Encryption processing can be divided into homomorphic encryption processing and non-homomorphic encryption processing. Homomorphic encryption processing can be implemented by using a homomorphic encryption function, and non-homomorphic encryption processing can be implemented by using a non-homomorphic encryption function.

Encrypted data obtained through homomorphic encryption processing can execute a computing task without being decrypted. In other words, homomorphic encryption processing allows direct computing of the encrypted data, and an obtained computing result is still encrypted. However, encrypted data obtained through non-homomorphic encryption processing cannot be directly computed. In this case, the computing task can be processed, so that a processed computing task can include the computing task and a non-homomorphic decryption function corresponding to the non-homomorphic encryption function. Therefore, when the processed computing task is performed on the encrypted data obtained through non-homomorphic encryption processing, the processed computing task first performs non-homomorphic decryption processing on the encrypted data by using the non-homomorphic decryption function, and further performs the computing task on decrypted data.

In some embodiments, after the first data protection function for implementing first data protection processing is generated in the trusted execution environment, the target white-box decryption combined function can be generated in the trusted execution environment based on the first data protection function. Because the trusted execution environment is a secure area completely isolated from the outside, generating the target white-box decryption combined function in the trusted execution environment can ensure that the target white-box decryption combined function is not stolen by the attacker. The target white-box decryption combined function can be pre-generated before the computing task is executed, or the target white-box decryption combined function can be temporarily generated when the computing task is executed. This is not limited in this specification. Then, the target white-box decryption combined function is provided to the GPU, so that the GPU processes the scrambled encrypted data by using the target white-box decryption combined function.

In some embodiments, if the target white-box decryption combined function is pre-generated before the computing task is executed, the target white-box decryption combined function can be stored in a host. For example, the target white-box decryption combined function can be packaged as a library file, and the library file is transmitted to the host for storage. In this case, software scrambling protection like shell adding can be performed on the library file, to avoid malicious deciphering. A plurality of GPUs can be mounted on the host, and a library file corresponding to each GPU is not necessarily the same. For ease of differentiation, and to prevent the computing task from being executed on an unauthorized GPU, a unique identifier of a GPU corresponding to a library file can be added, and the library file that carries the unique identifier of the GPU is stored in the host. When a function like scrambling and descrambling generated in the library file is executed, comparison and verification are performed on the function and the unique identifier of the GPU, and the function can be executed only when being consistent with the identifier.

In a process of completing this computing task, the trusted execution environment can determine a target GPU for executing this computing task. Therefore, the trusted execution environment can send a distribution indication for the target white-box decryption combined function to the host. The distribution indication indicates the host to send, to the target GPU, the target white-box decryption combined function corresponding to the target GPU. For example, the distribution indication can carry a unique identifier of the target GPU. In response to the distribution indication, the host searches for a library file corresponding to the target GPU based on the unique identifier of the target GPU carried in the distribution indication, and sends the found library file to the GPU. The GPU can search the received library file for the target white-box decryption combined function based on the shared key k of the local computing task. Certainly, the target white-box decryption combined function can alternatively be stored in the trusted execution environment. The white-box decryption combined function is stored, to avoid a case in which a white-box decryption combined function is generated temporarily each time a computing task is executed. This helps improve execution efficiency of the computing task and reduce system overheads required for generating the white-box decryption combined function.

In some embodiments, after the target white-box decryption combined function is generated in the trusted execution environment, further processing can be performed on the target white-box decryption combined function. For example, the target white-box decryption combined function can be processed by using a look-up table (look-up table, LUT) technology. Specifically, a decryption look-up table parameter of the target white-box decryption combined function can be generated in the trusted execution environment. For a specific generation process of the look-up table parameter, references can be made to look-up table content in the related technology. Details are omitted here for simplicity. The decryption look-up table parameter is used to record the target white-box decryption combined function corresponding to a key (namely, the above-mentioned shared key k) used for the encrypted data, and a candidate white-box decryption combined function corresponding to another candidate key, where the candidate key is different from the shared key k.

With reference to ciphertext descrambling function $F^{-1}$, decryption function D, and first data protection function G in the above-mentioned embodiments, the white-box decryption combined function can be represented as $D'=G \circ D \circ F^{-1}$. Table 1 shows a decryption look-up table parameter shown in an example embodiment. Refer to Table 1.

**Table 1**

| $D'_k$ |
| --- |

(continued)

| |
|---|
| $D'_g$ |
| $D'_h$ |
| $D'_m$ |
| $D'_n$ |

It can be determined from Table 1 that the decryption look-up table parameter records candidate white-box decryption combined functions (functions $D'_k$, $D'_g$, $D'_h$, $D'_m$, $D'_n$) respectively corresponding to a plurality of different keys (keys k, g, h, m, and n). After receiving the scrambled encrypted data, the GPU first finds, from the decryption look-up table parameter, target white-box decryption combined function $D'_k$ corresponding to the shared key k of the current computing task, and processes the scrambled encrypted data by using found target white-box decryption combined function $D'_k$. It should be noted that the shared key k can be encrypted in the trusted execution environment (an encryption function for encrypting the shared key is inconsistent with an encryption function for encrypting the raw data), and an encrypted key k' is sent to the GPU, so that the GPU can decrypt the encrypted key k' to obtain the shared key k, and further perform searching in the decryption look-up table based on the shared key k.

Clearly, in a process in which the GPU searches for the target white-box decryption combined function, the GPU cannot learn of functions included in the target white-box decryption combined function and a combined relationship between the functions. It can be determined that, the decryption look-up table parameter is generated, so that the functions included in the target white-box decryption combined function and the combined relationship between the functions can be hidden. In this way, even if the attacker steals the decryption look-up table parameter, it is difficult for the attacker to analyze the functions included in the target white-box decryption combined function, and it is more difficult to derive the original key. Certainly, to increase difficulty of deciphering, a random element can be added in a process of generating the decryption look-up table parameter, so that the attacker cannot derive the original key even if the attacker learns of a part of the functions included in the target white-box decryption combined function. In addition, the decryption look-up table parameter is generated, so that the GPU can directly process the scrambled encrypted data based on the found target white-box decryption combined function when executing the computing task, and does not need to compute, based on the original key, the target white-box decryption combined function corresponding to the original key. This helps improves efficiency of confidential computing.

In some embodiments, a current computing task can be referred to as an original computing function. The GPU performs the current computing task on the processed data, that is, the GPU computes the processed data by using the original computing function. The processed data are obtained by performing first data protection processing on the raw data. Therefore, if a computing result is obtained by performing computing on the processed data by using the original computing function, protection solution is performed on the computing result by using the first data protection solution, and the first data protection solution is implemented through the first data protection processing. For example, when the first data protection processing is plaintext scrambling processing, the processed data are plaintext scrambled data. The GPU computes the processed data by using the original computing function, to obtain a computing result on which data protection is performed by using a plaintext scrambling solution. When the first data protection processing is homomorphic encryption processing, the processed data are homomorphic encrypted data. The GPU computes the processed data by using the original computing function, to obtain a computing result on which data protection is performed by using a homomorphic encryption solution.

In addition, security of the original computing function (namely, the computing task) can be evaluated. If security of the original computing function is low, task protection can be performed on the original computing function, to further improve security of confidential computing by performing data protection on both the original computing function and the processed data that participate in computing. For example, in a privacy computing scenario for example, database query and private set intersection (PSI), in which computing security needs are high, a task protection function can be used to perform data protection on the original computing function. Specifically, the white-box computing combined function can be generated based on the original computing function and the task protection function in the trusted execution environment, and the white-box computing combined function is provided to the GPU, so that the GPU computes the processed data by using the white-box computing combined function, to obtain the computing result. In this case, data protection can be performed on the computing result by using any one of the following data protection solutions: the first data protection solution, or a combined solution of the first data protection solution and another data protection solution formed based on the task protection function. For ease of description, a function used to implement the first data protection processing is referred to as "the first data protection function". The following describes several task protection functions and corresponding white-box computing combined functions as examples.

(1) The task protection function can be a plaintext scrambling function. It is assumed that the task protection function is plaintext scrambling function G and the original computing function is function T. In this case, the white-box computing combined function can be represented as $T' = T \circ G$. When the first data protection function is plaintext scrambling function G (that is, the first data protection function is the same as the task protection function), the processed data are the plaintext scrambled data (implemented by function G). The GPU computes the processed data by using white-box computing combined function T', and data protection is performed on an obtained computing result by using the plaintext scrambling solution, where the plaintext scrambling solution is implemented by plaintext scrambling function G. That is, data protection is performed on the computing result by using the first data protection solution (implemented by using the first data protection function).

When the first data protection function is plaintext scrambling function H (that is, the first data protection function is different from the task protection function), the processed data are the plaintext scrambled data (implemented by function H). The GPU computes the processed data by using white-box computing combined function T', and data protection is performed on an obtained computing result by using a dual plaintext scrambling solution, where the dual plaintext scrambling solution is implemented by plaintext scrambling function G and plaintext scrambling function H. The data protection solution implemented by plaintext scrambling function G belongs to another data protection solution formed based on the task protection function. Therefore, data protection is performed on the computing result by using a combined solution of the first data protection solution (implemented by plaintext scrambling function H) and the another data protection solution.

When the first data protection function is homomorphic encryption function P, the processed data are homomorphic encrypted data. The GPU computes the processed data by using white-box computing combined function T', and data protection is performed on an obtained computing result by using a combined solution of the homomorphic encryption solution and the plaintext scrambling solution. The homomorphic encryption solution belongs to the first data protection solution (implemented by homomorphic encryption function P), and the plaintext scrambling solution belongs to the another data protection solution formed based on the task protection function (namely, plaintext scrambling function G).

(2) The task protection function can be a combined function of the plaintext scrambling function and the decryption function. Because there are two encryption cases: homomorphic encryption and non-homomorphic encryption, the decryption function can be classified into a homomorphic decryption function or a non-homomorphic decryption function.

(2-1) The task protection function is a combined function of the plaintext scrambling function and the homomorphic decryption function. For example, it is assumed that the first data protection function is homomorphic encryption function P, the homomorphic decryption function is function Q, the plaintext scrambling function is function G, and the original computing function is function T. In this case, the white-box computing combined function can be represented as $T' = T \circ G \circ Q$. In this case, the processed data are homomorphic encrypted data (implemented by function P). The GPU computes the processed data by using white-box computing combined function T'. The computing logic inside the white-box computing combined function can be understood as follows: first decrypting the processed data by using homomorphic decryption function Q, then scrambling decrypted data by using plaintext scrambling function G, and finally computing scrambled data by using original computing function T. Therefore, data protection is performed on an obtained computing result by using the plaintext scrambling solution implemented by plaintext scrambling function G. In this case, the another data protection solution formed based on the task protection function is a combined solution of plaintext scrambling and homomorphic decryption. Therefore, the plaintext scrambling solution implemented by plaintext scrambling function G belongs to a combined solution of the first data protection solution (implemented by homomorphic encryption function P) and the another data protection solution.

(2-2) The task protection function is a combined function of the plaintext scrambling function and the non-homomorphic decryption function. For example, it is assumed that the first data protection function is non-homomorphic encryption function M, the non-homomorphic decryption function is function N, the plaintext scrambling function is function G, and the original computing function is function T. In this case, the white-box computing combined function is $T' = T \circ G \circ N$. In this case, the processed data are non-homomorphic encrypted data (implemented by function M). The GPU computes the processed data by using white-box computing combined function T'. The computing logic inside the white-box computing combined function can be understood as follows: first decrypting the processed data by using non-homomorphic decryption function N, then scrambling decrypted data by using plaintext scrambling function G, and finally computing scrambled data by using original computing function T. Therefore, data protection is performed on an obtained computing result by using the plaintext scrambling solution brought by plaintext scrambling function G. In this case, the another data protection solution formed based on the task protection function is a combined solution of plaintext scrambling and non-homomorphic decryption. Therefore, the plaintext scrambling solution brought by function G belongs to a combined solution of the first data protection solution (namely, the non-homomorphic encryption solution) and the another data protection solution. The task protection function and the white-box computing combined function are merely examples. In a practice process of the solution in this specification, data protection can be performed on the original computing function by using another task protection function. A core idea of the task protection function is to provide data protection for the original computing function while ensuring that a specific data protection solution exists in the obtained computing result (that is, the computing result obtained by the GPU cannot be a plaintext computing result), to further improve security of confidential computing.

In some embodiments, when task protection is performed on the original computing function by using the task protection function, the task protection function can further be hidden by using a look-up table technology. A task look-up table parameter of the white-box computing combined function (including the original computing function and the task protection function) can be generated in the trusted execution environment. The task look-up table parameter of the white-box computing combined function is generated, so that the original computing function and the task protection function can be hidden. In this way, even if the attacker steals the task look-up table parameter, the attacker can only directly run the computing task based on a candidate white-box computing combined function recorded in the task look-up table parameter, and cannot decipher the task protection function. Especially, when the task protection function is the same as the first data protection function, security of confidential computing can be greatly improved.

Based on a case in which both the task protection function and the first data protection function are plaintext scrambling functions G in the above-mentioned embodiment, the target white-box decryption combined function for processing the encrypted data is $D_k{}'=G{\circ}D_k{\circ}F^{-1}$, and the white-box computing combined function is $T'=T{\circ}G$. The task look-up table parameter of the white-box computing combined function is generated, so that the attacker can be prevented from deciphering the task protection function (namely, plaintext scrambling function G), and further, the attacker can be prevented from deciphering the original key of the current computing task based on the task protection function and the target white-box decryption combined function. This effectively improves security of confidential computing.

S204: Obtain the computing result or a derived result of the computing result, and perform processing in the trusted execution environment to obtain the plaintext computing result.

For security protection, the GPU can further process the computing result to obtain the derived result. The GPU returns the computing result or the derived result to the trusted execution environment, and data protection is performed on the computing result or the derived result by using a data protection solution, to ensure security in a data transmission process. A data de-protection solution can be used in the trusted execution environment to process the received computing result or the derived result, to obtain the plaintext computing result. The data de-protection solution corresponds to the data protection solution used for the computing result or the derived result, and is used to perform data de-protection processing on the computing result or the derived result to obtain the plaintext computing result. For example, if data protection is performed on the computing result by using the combined solution of the homomorphic encryption solution and the plaintext scrambling solution, the data de-protection solution used in the trusted execution environment is a combined solution of the homomorphic decryption solution and the plaintext descrambling solution. If data protection is performed on the derived result by using the plaintext descrambling solution, the data de-protection solution used in the trusted execution environment is the plaintext descrambling solution. With reference to the embodiment in S202, Table 2 shows an example of data protection solutions used for several computing results and corresponding data de-protection solutions used in the trusted execution environment. Refer to Table 2.

**Table 2**

| Computing result | Data protection solution used for the computing result | Data de-protection solution used in a trusted execution environment |
|---|---|---|
| Plaintext scrambling result | Plaintext scrambling solution | Plaintext descrambling solution |
| Homomorphic encryption result | Homomorphic encryption solution | Homomorphic decryption solution |
| Dual plaintext scrambling result | Dual plaintext scrambling solution | Dual plaintext descrambling solution |
| (Homomorphic encryption+plaintext scrambling) result | Combined solution of (homomorphic encryption solution+plaintext scrambling solution) | Combined solution of (homomorphic decryption solution+plaintext descrambling solution) |

In some embodiments, the GPU can perform second data protection processing on the computing result to obtain the derived result. The second data protection processing can be implemented by using a second data protection function, and the second data protection function can include but is not limited to the encryption function, the ciphertext scrambling function, a combined function of the plaintext descrambling function and the encryption function, and a combined function of the decryption function and the plaintext scrambling function. A person skilled in the art can set a specific second data protection function based on an actual need and a data protection solution used for the computing result. This is not limited in this specification. The derived result uses another data protection solution different from the data protection solution used for the computing result. Alternatively, data protection is performed on the derived result by using a combined solution in which another data protection solution is superimposed on the data protection solution used for the computing result.

Table 3 shows an example of different second data protection functions and data protection solutions used for the derived result. Refer to Table 3.

**Table 3**

| Computing result | Second data protection function | Data protection solution used for the derived result |
|---|---|---|
| Plaintext scrambling result | Encryption function | Combined solution of (plaintext scrambling solution+encryption solution) |
| | Combined function of plaintext descrambling function+encryption function | Encryption solution |
| Homomorphic encryption result | Ciphertext scrambling function | Combined solution of (homomorphic encryption solution+ciphertext scrambling solution) |
| | Combined function of homomorphic decryption+plaintext scrambling function | Plaintext scrambling solution |
| Dual plaintext scrambling result (implemented by plaintext scrambling function H and plaintext scrambling function G) | Plaintext descrambling function $H^{-1}$ | Plaintext scrambling solution (implemented by function G) |
| | Combined function of plaintext descrambling function $H^{-1}$+encryption function | Combined solution of [encryption solution+plaintext scrambling solution (implemented by function G)] |
| | Combined function of plaintext descrambling function $H^{-1}$, plaintext descrambling function $G^{-1}$, and encryption function | Encryption solution |
| (Homomorphic encryption+plaintext scrambling) result | Plaintext descrambling function | Homomorphic encryption solution |

Refer to Table 3. ① When data protection is performed on the computing result by using the plaintext scrambling solution (that is, the computing result is the plaintext scrambling result), the second data protection function can be the encryption function. The GPU processes the plaintext scrambling result by using the encryption function, and data protection is performed on the obtained derived result by using the plaintext scrambling solution on which the encryption solution is superimposed. Through dual data protection of scrambling and encryption, security of the derived result in a transmission process can be further improved.

In addition, the second data protection function can alternatively be the combined function of the plaintext descrambling function and the encryption function, where the plaintext descrambling solution implemented by the plaintext descrambling function corresponds to the plaintext scrambling solution used for the computing result. The GPU processes the plaintext scrambling result by using the combined function of the plaintext descrambling function and the encryption function. Function execution logic inside the combined function can be understood as follows: first descrambling the plaintext scrambling result by using the plaintext descrambling function, and then encrypting a descrambling result by using the encryption function. Therefore, data protection is performed on the obtained derived result by using the encryption solution, and the encryption solution is different from the plaintext scrambling solution used for the computing result. For example, it is assumed that the first data protection function is plaintext scrambling function G. **In** this case, the GPU computes the processed data by using the original computing function, and data protection is performed on the obtained computing result by using the plaintext scrambling solution (implemented by function G). The second data protection function is combined function E' of encryption function E and plaintext descrambling function $G^{-1}$ corresponding to plaintext scrambling function G, that is, $E' = E \circ G^{-1}$. The GPU processes the computing result by using combined function E', and data protection is performed on the obtained derived result by using an encryption solution (implemented by function E). The computing result is processed by using combined function E', so that a processing operation of plaintext descrambling is implemented by the GPU. After receiving the derived result, the trusted execution environment only needs to perform decryption processing and does not need to perform descrambling processing. This effectively reduces data processing pressure of the trusted execution environment, ensures that the derived result can have a data protection solution, and improves data security of the derived result.

② When data protection is performed by using the homomorphic encryption solution (that is, the computing result is the homomorphic encryption result), the second data protection function can be the ciphertext scrambling function. The GPU processes the homomorphic encryption result by using the cipher scrambling function, and data protection is performed on the obtained derived result by using the homomorphic encryption solution on which a scrambling solution is superimposed. Through dual data protection of scrambling and encryption, security of the derived result in a transmission process is further improved.

In addition, the second data protection function can alternatively be the combined function of the homomorphic decryption function and the plaintext scrambling function. The GPU processes the homomorphic encryption result by using the combined function. Function execution logic inside the combined function can be understood as follows: first decrypting the homomorphic encryption result by using the homomorphic decryption function, and then scrambling a decryption result by using the plaintext scrambling function. Therefore, data protection is performed on the obtained derived result by using the plaintext scrambling solution, and the plaintext scrambling solution is different from the homomorphic encryption solution used for the computing result.

③ When data protection is performed on the computing result by using the dual plaintext scrambling solution (that is, the computing result is the dual plaintext scrambling result), the second data protection function can be plaintext descrambling function $H^{-1}$ corresponding to plaintext scrambling function H. The GPU processes the computing result by using plaintext descrambling function $H^{-1}$, and data protection is performed on the obtained derived result by using the plaintext scrambling solution (implemented by plaintext scrambling function G). The plaintext scrambling solution is different from the dual plaintext scrambling solution used for the computing result.

The second data protection function can alternatively be the combined function of plaintext descrambling function $H^{-1}$ and the encryption function. The GPU processes the computing result by using the combined function, and data protection is performed on the obtained derived result by using the combined solution of the plaintext scrambling solution (implemented by plaintext scrambling function G) and the encryption solution. The combined solution is different from the dual plaintext scrambling solution used for the computing result.
The second data protection function can alternatively be a combined function of plaintext descrambling function $H^{-1}$, plaintext descrambling function $G^{-1}$ corresponding to plaintext scrambling function G, and the encryption function. The GPU processes the computing result by using the combined function, and data protection is performed on the obtained derived result by using the encryption solution. The encryption solution is different from the dual plaintext scrambling solution used for the computing result.

④ When data protection is performed on the computing result by using the combined solution of the homomorphic encryption solution and the plaintext scrambling solution, the second data protection function can be the plaintext descrambling function corresponding to the plaintext scrambling function. The GPU processes the computing result by using the plaintext descrambling function, and data protection is performed on the obtained derived result by using the homomorphic encryption solution. The homomorphic encryption solution is different from the data protection solution used for the computing result. In this case, when receiving the derived result, the trusted execution environment can obtain the plaintext computing result by performing only homomorphic decryption on the derived result. This effectively reduces data processing pressure of the trusted execution environment.

In addition, notably, the second data protection function in Table 3 is only an example. In a practice process of the solution in this specification, another second data protection function can be used to process the computing result. For example, when the computing result is the plaintext scrambling result (implemented by plaintext scrambling function G), the second data protection function can further be a combined function of plaintext descrambling function $G^{-1}$, the encryption function, and another plaintext scrambling function L. The another plaintext scrambling function L is different from plaintext scrambling function G that implements the plaintext scrambling solution on the computing result. In conclusion, a core idea of the second data protection function is to provide, for the derived result, another data protection solution different from the data protection solution used for the computing result, or to perform data protection on the derived result by using the data protection solution that is used for the computing result and on which another data protection solution is superimposed, so as to further improve data security of the derived result.

In the above-mentioned embodiments, the encrypted data are scrambled in the trusted execution environment, and the scrambled encrypted data are sent to the GPU. In this process, a layer of algorithm-level protection is added to the encrypted data by using a scrambling operation, to improve security of the scrambled encrypted data when the scrambled encrypted data are transmitted to the GPU. After receiving the scrambled encrypted data, the GPU processes the scrambled encrypted data by using the target white-box decryption combined function to obtain the processed data. The target white-box decryption combined function is used to perform ciphertext descrambling processing, decryption processing, and first data protection processing on the scrambled encrypted data. An effect of processing the scrambled encrypted data by using the target white-box decryption combined function is equivalent to that of performing the first data protection processing on raw data (namely, plaintext data) corresponding to the encrypted data, that is, the processed data are data with data protection. In a process in which the GPU executes a computing task, the GPU can obtain only the processed data processed by using the target white-box decryption combined function, and cannot obtain the raw data. This effectively improves security of the raw data in the computing process. In addition, because the target white-box decryption combined function is formed by a plurality of hybrid functions, even if the attacker steals the target white-box decryption combined function, the attacker cannot decipher the plurality of hybrid functions and an original key based on the target white-box decryption combined function, and cannot decipher the raw data corresponding to the encrypted data. Because the processed data have a data protection solution, the computing result or the derived result of the computing result also has a data protection solution to an extend. The protected computing result or the derived result of the computing result is returned to the trusted execution environment, so that security in a data transmission process can be ensured. Then, the computing result or the derived result of the computing result is processed in the trusted execution environment to obtain the plaintext computing result.

It can be determined that in the above-mentioned embodiments, plaintext data exist only in the trusted execution environment. In a data transmission process and a computing process, there are certain data protection measures to protect data. In this way, security of confidential computing is greatly improved, and a security boundary of the TEE is expanded to the GPU.

In addition, notably, a plurality of GPUs can be mounted on the host, and the trusted execution environment can schedule a computing task of each GPU. In this scenario, different first data protection functions (used to implement the first data protection processing) and different ciphertext scrambling functions can be generated for different GPUs, to generate different target white-box decryption combined functions based on the different first data protection functions. In this way, each GPU corresponds to a different target white-box decryption combined function and a different ciphertext scrambling function. This helps further improve security of confidential computing in each GPU.

FIG. 3 is a schematic flowchart of a method for implementing confidential computing, according to an example embodiment of this specification. The method can be applied to a GPU mounted on a host. In a technical solution of this embodiment, the GPU needs to cooperate with a trusted execution environment to implement confidential computing. The trusted execution environment can be constructed based on software and hardware. For example, hardware configured to construct the trusted execution environment can include an expansion card inserted into a device body of the host, or a processor and a memory mounted on the device body of the host. As shown in FIG. 3, the method for implementing confidential computing can include the following steps.

S302: Obtain scrambled encrypted data from the trusted execution environment and a target computing function for the scrambled encrypted data, where the scrambled encrypted data are obtained by scrambling encrypted data based on a ciphertext scrambling function in the trusted execution environment.

The target computing function can be understood as a current computing task. The GPU can obtain the target computing function from the trusted execution environment, can obtain the target computing function from the host, or can obtain the target computing function in another way.

S304: Process the scrambled encrypted data by using a target white-box decryption combined function, and run the target computing function for obtained processed data to obtain a corresponding computing result, where the target white-box decryption combined function is used to perform ciphertext descrambling processing, decryption processing, and first data protection processing on the scrambled encrypted data.

For a specific process of processing the scrambled encrypted data by the GPU and content of the target white-box decryption combined function, references can be made to the embodiment shown in FIG. 2. Details are omitted here for simplicity.

In some embodiments, the first data protection processing can include at least one of the following: plaintext scrambling processing, homomorphic encryption processing, or non-homomorphic encryption processing.

In some embodiments, task protection can be performed on the target computing function to improve security of the target computing function. Specifically, the GPU can combine the target computing function with a task protection function to obtain a white-box computing combined function. Certainly, the white-box computing combined function can also be generated in the trusted execution environment and provided to the GPU. The GPU runs the white-box computing combined function for the processed data to obtain the computing result.

In some embodiments, when task protection is performed on the target computing function by using the task protection function, the task protection function can further be hidden by using a look-up table technology. A task look-up table parameter of the white-box computing combined function (including the target computing function and the task protection function) can be generated in the trusted execution environment. The task look-up table parameter further records a candidate white-box computing combined function corresponding to a candidate computing function, and the candidate computing function is different from the target computing function.

S306: Return the computing result or a derived result of the computing result to the trusted execution environment, to obtain, through processing, a plaintext computing result in the trusted execution environment.

In some embodiments, the GPU can perform second data protection processing on the computing result to obtain the derived result. The derived result uses another data protection solution different from a data protection solution used for the computing result, or superimposes the another data protection solution on the data protection solution used for the computing result. In this way, security of the derived result can be effectively improved. For a specific example of a second data protection function and the derived result, references can be made to the above-mentioned embodiment in S204. Details are omitted here for simplicity.

The embodiment shown in FIG. 3 describes a specific implementation process of the technical solution of the specification from a perspective of the GPU. The technical solution of the specification corresponds to the technical solution from a perspective of the trusted execution environment in the embodiment shown in FIG. 2. The GPU cooperates with the trusted execution environment to implement a complete confidential computing process. All descriptions related to the trusted execution environment in an operation process of generating and managing a confidential computing combined function, a computing result, etc. in the embodiment shown in FIG. 2 are also applicable to the embodiment shown in FIG. 3, and are not described here again.

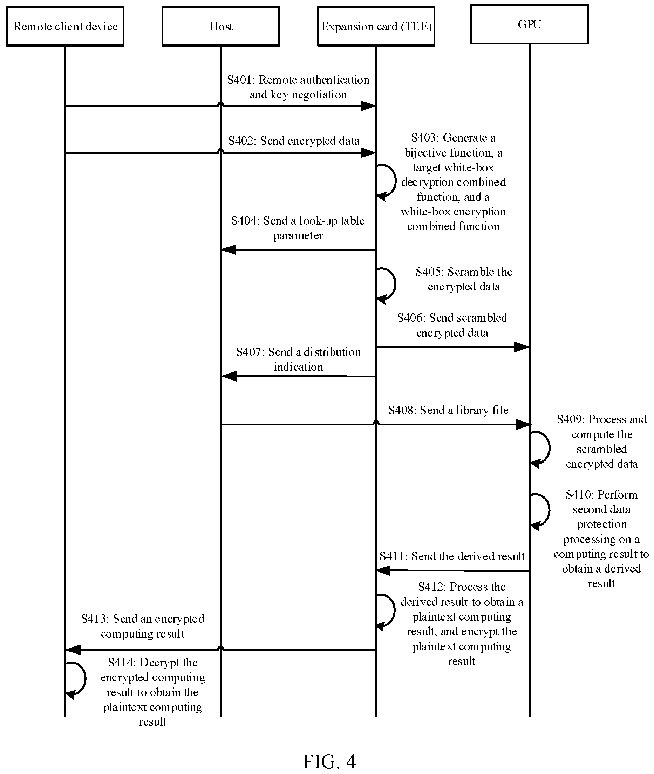

FIG. 4 is a schematic diagram of an interaction procedure for implementing confidential computing, according to an example embodiment of this specification. As shown in FIG. 4, the interaction procedure relates to a remote client device, a trusted execution environment, a host, and a GPU mounted on the host. In this embodiment, the trusted execution environment is constructed based on an expansion card inserted into a device body of the host, the remote client device is a data sender, and a first data protection function used to implement first data protection processing is set as a plaintext scrambling function. In a privacy database query scenario, the remote client device expects to query all even numbers in a certain set s={2, 5, 10, 19}. A confidential computing process includes the following steps.

S401: The remote client device performs remote authentication on the TEE of the expansion card, and when the TEE of the expansion card passes remote authentication, the remote client device negotiates a key of a current computing task with the TEE of the expansion card. It is assumed that in the current computing task, the remote client device and the TEE of the expansion card agree to use a symmetric encryption algorithm to negotiate to obtain a symmetric key k.

S402: The remote client device sends encrypted data $c_1$ to the expansion card.

The remote client device generates a first random mask $r_q$ and a second random mask $r_i$, performs exclusive OR on the first random mask $r_q$ and a four-digit binary number to generate first raw data $p_q$ ($p_q = (xxx0)_2 \oplus r_q$) of the current computing task, and performs exclusive OR on the second random mask $r_i$ and each number included in the set s to obtain an exclusive OR post set $\{p_i\}$ ($p_i = s_i \oplus r_i$, and i represents an $i^{th}$ number in the set s). The remote client device encrypts the first raw data $p_q$ and the exclusive OR post set $\{p_i\}$ by using the shared key k and encryption function E of the current computing task to obtain encrypted data $c_{11}$ and $c_{12}$. For principles of the encryption processes, references can be made to formulas (1-1) and (1-2).

$$c_{11} = E_k(p_q) \ (1\text{-}1)$$

$$c_{12} = E_k(\{p_i\}) \ (1\text{-}2)$$

S403: The expansion card generates bijective functions F and G, a target white-box decryption combined function, and a white-box encryption combined function in the trusted execution environment.

The expansion card can generate different random number sequences in the trusted execution environment, and separately generate bijective functions F and G based on the different random number sequences. Randomness of the random number sequence needs to be ensured by using a safe random number. Bijective function F can be used as a ciphertext scrambling function, and bijective function G can be used as a plaintext scrambling function. Then, a target white-box decryption combined function is generated based on ciphertext descrambling function $F^{-1}$ corresponding to ciphertext scrambling function F, the first data protection function (namely, plaintext scrambling function G), and decryption function D used to decrypt the encrypted data in the trusted execution environment. Decryption function D corresponds to encryption function E. For generated target white-box decryption combined function $D_k'$, references can be made to formula (2).

$$D_k' = G \circ D_k \circ F^{-1} \ (2)$$

The white-box encryption combined function includes encryption function E and plaintext descrambling function $G^{-1}$ corresponding to plaintext scrambling function G. That is, for white-box encryption combined function $E_k'$, references can be made to formula (3).

$$E_k' = E_k \circ G^{-1} \ (3)$$

In formulas (2) and (3), k represents the shared key of the current computing task.

S404: The expansion card sends a decryption look-up table parameter of the target white-box decryption combined function and an encryption look-up table parameter of the white-box encryption combined function to the host for storage.

The expansion card separately generates the decryption look-up table parameter and the encryption look-up table parameter in the trusted execution environment, and packages the two parameters into a library file. The expansion card sends the library file to the host for storage.

S405: The expansion card separately scrambles encrypted data $c_{11}$ and $c_{12}$ by using ciphertext scrambling function F, to obtain scrambled encrypted data $c_{11}'$ and $c_{12}'$.

For scrambling processes, references can be made to formulas (4-1) and (4-2).

$$c_{11}' = F(c_{11}) \ (4\text{-}1)$$

$$c_{12}' = F(c_{12}) \ (4\text{-}2)$$

Notably, if the expansion card pre-generates the target white-box decryption combined function and the white-box encryption combined function before executing the current computing task, the expansion card can directly jump to S405 after S402 is executed. If the expansion card temporarily generates the target white-box decryption combined function and the white-box encryption combined function when executing the current computing task, the expansion card can perform S404 and S405 in parallel, or can first perform S404 and then perform S405, or can first perform S405 and then perform S404. This is not limited in this specification.

S406: The expansion card sends scrambled encrypted data $c_1'$ to the GPU.

S407: The expansion card sends a distribution indication for the library file to the host.

S408: The host sends the library file to the GPU in response to the distribution indication.

S409: The GPU searches the library file for target white-box decryption combined function $D_k'$ corresponding to the shared key k of the current computing task, separately processes scrambled encrypted data $c_{11}'$ and $c_{12}'$ from the expansion card by using target white-box decryption combined function $D_k'$, and obtains, through computing, a corresponding computing result r' by using obtained processed data p'.

For processes of separately processing scrambled encrypted data $c_{11}'$ and $c_{12}'$, references can be made to formulas (5-1) and (5-2).

$$p_q' = D_k'(c_{11}') = G \circ D_k \circ F^{-1}(c_{11}') = G(p_q) \ (5-1)$$

$$p_i' = D_k'(c_{12}') = G \circ D_k \circ F^{-1}(c_{12}') = G(\{p_i\}) \ (5-2)$$

It can be determined from the formula (4-1) and the formula (5-1) that scrambled encrypted data $c_{11}'$ is obtained by using ciphertext scrambling function F and encryption function $E_k$. When scrambled encrypted data $c_{11}'$ are processed by using target white-box decryption combined function $D_k$', function execution logic in the combined function is as follows:

first descrambling scrambled encrypted data $c'_{11}$ by using ciphertext descrambling function $F^{-1}$, then decrypting descrambled data by using decrypted function $D_k$ to obtain raw data $p_q$, and finally scrambling raw data $p_q$ by using plaintext scrambling function G to obtain processed data $p_q$'. The processed data $p_q$' are plaintext scrambled data. Similarly, processed data $p_i$' are also plaintext scrambled data.

Notably, the target white-box decryption combined function serves as a combination of a plurality of functions, an input of the target white-box decryption combined function is the scrambled encrypted data, and an output of the target white-box decryption combined function is the processed data. Therefore, in a process of processing data by the GPU, raw data are not obtained, and only processed data can be obtained, and a computing task is executed based on the processed data. In this data processing way, the target white-box decryption combined function is used, to help avoid exposing plaintext data in a process of executing the computing task, thereby greatly improving data security and confidentiality in a computing process.

The GPU can use plaintext scrambling function G as the task protection function, to perform task protection on original computing function T. For a task protection process, references can be made to formula (6).

$$T' = T \circ G \quad (6)$$

Function T' obtained by performing task protection can be referred to as a white-box computing combined function. Then, white-box computing combined function T' is performed on processed data $p_q$' and $p_i$' to obtain a computing result r'. For a computing process, references can be made to formula (7).

$$r' = \mathrm{T}'\big(p_q' \oplus p_i'\big) = T \circ G\big(p_q' \oplus p_i'\big) \, (7)$$

It can be determined from the formulas (5-1), (5-2), and (7) that data protection is performed on the computing result r' by using a plaintext scrambling solution, and the plaintext scrambling solution is implemented by plaintext scrambling function G.

S410: The GPU performs second data protection processing on the computing result to obtain a derived result.

It is assumed that white-box encryption combined function $E_k$' generated in S403 is used as a second data protection function, to implement the second data protection processing by using the second data protection function. In this case, for a processing process of the computing result, references can be made to formula (8).

$$c'_2 = E'_k(r') = E_k \circ G^{-1}(r') \, (8)$$

Here, $c'_2$ represents the derived result. It can be determined from the formula (7) and the formula (8) that data protection is performed on the derived result $c'_2$ by using an encryption solution, and the encryption solution is implemented by encryption function $E_k$.

S411: The GPU sends the derived result $c'_2$ to the expansion card.

S412: The expansion card processes the derived result in the trusted execution environment to obtain a plaintext computing result. In addition, the expansion card encrypts the plaintext computing result by using the symmetric key k, to obtain an encrypted computing result.

In this embodiment, data protection is performed on the derived result by using the encryption solution (implemented by encryption function $E_k$). Therefore, the expansion card decrypts the derived result by using decryption function $D_k$, to obtain the plaintext computing result.

S413: The expansion card returns the encrypted computing result to the remote client device.

S414: The remote client device decrypts the encrypted computing result by using the shared key k to obtain the plaintext computing result. So far, the current computing task ends.

If the client device finds that there is an i that can enable the lowest bit of a result of $(p_q \oplus p_i \oplus r_q \oplus r_i)$ to be 0, the $n^{th}$ number is an even number.

Clearly, in the above-mentioned confidential computing process, the host only knows that a user needs to execute a database query instruction, but the host cannot obtain the first raw data of the user and data of the set s. Therefore, the above-mentioned technical solutions can provide algorithm-level security protection for the computing task, to implement confidential computing. In addition, the target white-box decryption combined function is formed by a plurality of hybrid functions. Therefore, even if an attacker steals the target white-box decryption combined function, the attacker cannot decipher the plurality of hybrid functions and an original key based on the target white-box decryption combined function, and cannot decipher the raw data corresponding to the encrypted data. Therefore, algorithm-level security protection is provided for a computing process, and confidential computing is implemented.

In some embodiments, a host end may be a data transaction center, and the set s may be a ciphertext database hosted at the host end. In this case, the set s may be encrypted by using a fixed key k, that is, ciphertext data in the ciphertext database can be pr-obtained through encrypting by using the key k. Then, the set s is superposed with a mask, and a set on which the mask is superposed is stored at the host end. The client device only needs to perform mask superposing and encryption operations on the first raw data $p_q$. A key used by the client device for encryption needs to be generated by negotiation each time a computing task is executed. The key can be represented by $k'$. The GPU can obtain, from the expansion card, the encrypted data corresponding to the first raw data $p_q$, obtain, from the host end, the set on which the mask is superposed, then process obtained data, and compute by using processed data to obtain a computing result.

Corresponding to the method embodiments shown in FIG. 2 and FIG. 3, this specification further provides some embodiments of a system for implementing confidential computing, and the system includes a trusted execution environment and a GPU.

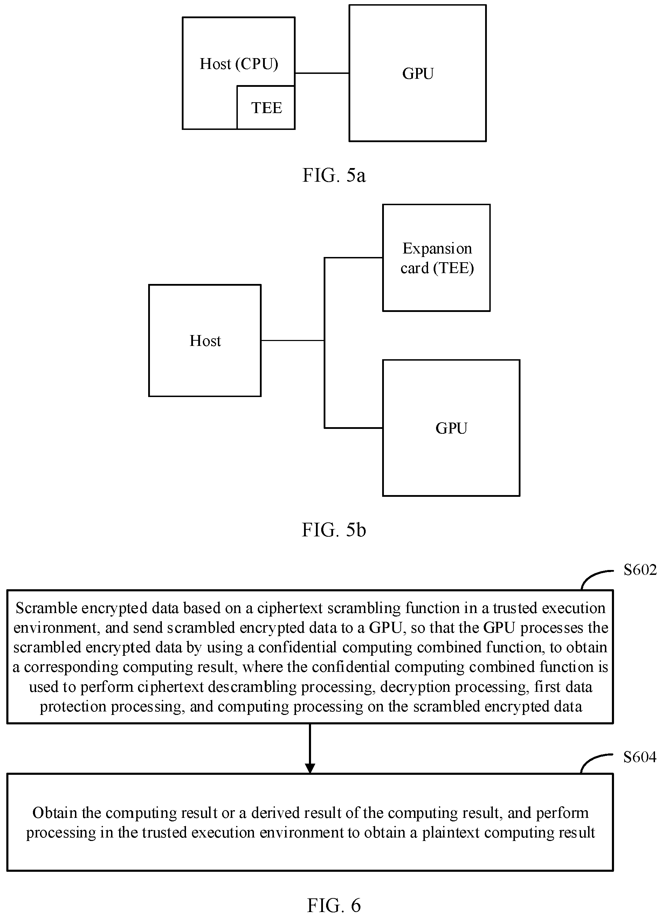

FIG. 5a and FIG. 5b are schematic diagrams of a framework of a system for implementing confidential computing, according to an example embodiment of this specification. In FIG. 5a, a trusted execution environment is constructed based on a processor mounted on a device body of a host, that is, the TEE is constructed by a CPU of the host. In FIG. 5b, a trusted execution environment is constructed based on an expansion card inserted into a device body of a host, that is, the TEE is constructed by the expansion card. In this scenario, both the GPU and the expansion card can be inserted into a PCIE bus of the device body of the host. Certainly, deployment can alternatively be performed in the following way. The expansion card is inserted into the PCIE bus of the device body of the host, and the GPU is mounted on the expansion card in a form of a subcard. This is not limited in this specification.

In a process of implementing confidential computing, the trusted execution environment is used to: scramble encrypted data based on a ciphertext scrambling function, and send scrambled encrypted data to the GPU. Then, the trusted execution environment obtains a computing result or a derived result of the computing result from the GPU, and processes the computing result or the derived result of the computing result to obtain a plaintext computing result.

The GPU is configured to: process the scrambled encrypted data by using a target white-box decryption combined function, and obtain, through computing, a corresponding computing result by using obtained processed data. The target white-box decryption combined function is used to perform ciphertext descrambling processing, decryption processing, and first data protection processing on the scrambled encrypted data. The GPU then returns the computing result or the derived result of the computing result to the trusted execution environment.

In some embodiments, the first data protection processing can include at least one of the following: plaintext scrambling processing, homomorphic encryption processing, or non-homomorphic encryption processing.

In some embodiments, in the systems shown in FIG. 5a and FIG. 5b, the computing function executed by the GPU on the processed data can be an original computing function, or can be a white-box computing combined function of the original computing function and a task protection function. The task protection function is used to implement data protection on the original computing function to further improve security of confidential computing. When the computing result is obtained by using the processed data and the original computing function, data protection is performed on the computing result by using a first data protection solution, and the first data protection solution is implemented by first data protection processing. When the computing result is obtained by using the processed data and the white-box computing combined function, data protection is performed on the computing result by using any one of the following data protection solutions: the first data protection solution, or a combined solution of the first data protection solution and another data protection solution formed based on the task protection function. For details, references can be made to the embodiment in FIG. 2, and details are omitted here for simplicity.

In some embodiments, in the systems shown in FIG. 5a and FIG. 5b, the GPU can perform second data protection processing on the computing result to obtain the derived result. The second data protection processing can be implemented by using a second data protection function, and the second data protection function can include but is not limited to an encryption function, a ciphertext scrambling function, a combined function of a plaintext descrambling function and the encryption function, and a combined function of a decryption function and a plaintext scrambling function. A person skilled in the art can set a specific second data protection function based on an actual need and a data protection solution used for the computing result. This is not limited in this specification. The derived result uses another data protection solution different from the data protection solution used for the computing result. Alternatively, data protection is performed on the derived result by using a combined solution in which another data protection solution is superimposed on the data protection solution used for the computing result. For a specific example of the second data protection function and the derived result, references can be made to the above-mentioned embodiment in S204. Details are omitted here for simplicity.

In the above-mentioned embodiments, in a process in which the TEE cooperates with the GPU to implement confidential computing, data protection is separately performed on the original computing function and the raw data corresponding to the encrypted data, to improve security of confidential computing. The data protection of the raw data is decoupled from the data protection of the original computing function, so that the raw data and the original computing function are separately independently managed and combined.

In addition, this specification further proposes a technical solution for performing data protection on both the original computing function and the raw data.

FIG. 6 is a schematic flowchart of a method for implementing confidential computing, according to an example embodiment of this specification. As shown in FIG. 6, the method can be applied to a trusted execution environment, and the trusted execution environment can be constructed based on software and hardware. For example, hardware used to construct the trusted execution environment can include an expansion card inserted into a device body of a host, or a processor and a memory that are mounted on the device body of the host. In a technical solution of this embodiment, a GPU is further mounted on the host.

Refer to FIG. 6. A method for implementing confidential computing can include the following steps.

S602: Scramble encrypted data based on a ciphertext scrambling function in the trusted execution environment, and send scrambled encrypted data to the GPU, so that the GPU processes the scrambled encrypted data by using a confidential computing combined function, to obtain a corresponding computing result, where the confidential computing combined function is used to perform ciphertext descrambling processing, decryption processing, first data protection processing, and computing processing on the scrambled encrypted data.

The encrypted data can be obtained by a data sender by encrypting raw data based on a shared key of a current computing task. The ciphertext scrambling function is used to further transform the encrypted data, to increase difficulty of deciphering the encrypted data. In this embodiment, the ciphertext scrambling function can be generated in the trusted execution environment.

After receiving the scrambled encrypted data, the GPU processes the scrambled encrypted data by using the confidential computing combined function to obtain the corresponding computing result. The confidential computing combined function is used to perform ciphertext descrambling processing, decryption processing, first data protection processing, and computing processing on the scrambled encrypted data. To implement an effect of the plurality of types of data processing, the confidential computing combined function can be obtained by combining a plurality of functions. For example, the confidential computing combined function can include a ciphertext descrambling function corresponding to the ciphertext scrambling function, a first data protection function, a decryption function used to decrypt the encrypted data, and a computing function. The computing function can be understood as an original computing function. The ciphertext descrambling function is used to implement ciphertext descrambling processing, the decryption function is used to implement decryption processing, the first data protection function is used to implement first data protection processing, and the computing function is used to implement computing processing.

In a process in which the scrambled encrypted data are processed by the GPU, an input of the confidential computing combined function is the scrambled encrypted data, and an output is the computing result. Any combined function usually has an execution order. For example, function execution logic inside the confidential computing combined function can be understood as follows: first descrambling the scrambled encrypted data by using the ciphertext descrambling function to obtain the encrypted data; then decrypting the encrypted data by using the decryption function to obtain raw data corresponding to the encrypted data; further performing data protection on the raw data by using the first data protection function; and finally performing the computing function on protected data to obtain the corresponding computing result. The first data protection function can include at least one of the following: a plaintext scrambling function, a homomorphic encryption function, or a non-homomorphic encryption function.

For example, it is assumed that the ciphertext scrambling function is function F, the ciphertext descrambling function is function $F^{-1}$, the decryption function used to decrypt the encrypted data is function D, the first data protection function is function G, and the computing function is function T. In this case, confidential computing combined function T' can be represented as $T' = T \circ G \circ D \circ F^{-1}$, where $\circ$ represents a combined relationship between the functions. The confidential computing combined function can be generated in the trusted execution environment and provided to the GPU. It can be determined that in the technical solution of this embodiment, the original computing function needs to be first encrypted/scrambled and then sent to the trusted execution environment, so that the original computing function is obtained through decryption/descrambling in the trusted execution environment, and the confidential computing combined function is generated based on the original computing function.

Clearly, in the above-mentioned way, the original computing function is mixed with another function to generate the confidential computing combined function. In a processing process, the GPU can obtain only the computing result output by the confidential computing combined function, and cannot obtain the raw data, the original computing function, and the shared key used in the current computing task. Therefore, data protection is implemented for both the original computing function and the raw data. This helps improve security of confidential computing.

S604: Obtain the computing result or a derived result of the computing result, and perform processing in the trusted execution environment to obtain a plaintext computing result.

The derived result can be obtained by performing further processing on the computing result by the GPU. For a specific processing way, references can be made to related content in the above-mentioned embodiment in S204. Details are omitted here for simplicity. In the trusted execution environment, a data de-protection solution is used to process the received computing result or the derived result, to obtain the plaintext computing result, and the data de-protection solution corresponds to a data protection solution used for the computing result or the derived result.

In this embodiment, data protection is performed on both the original computing function and the raw data. This helps improve security of confidential computing, and improve efficiency and convenience of managing the original computing function and the raw data.

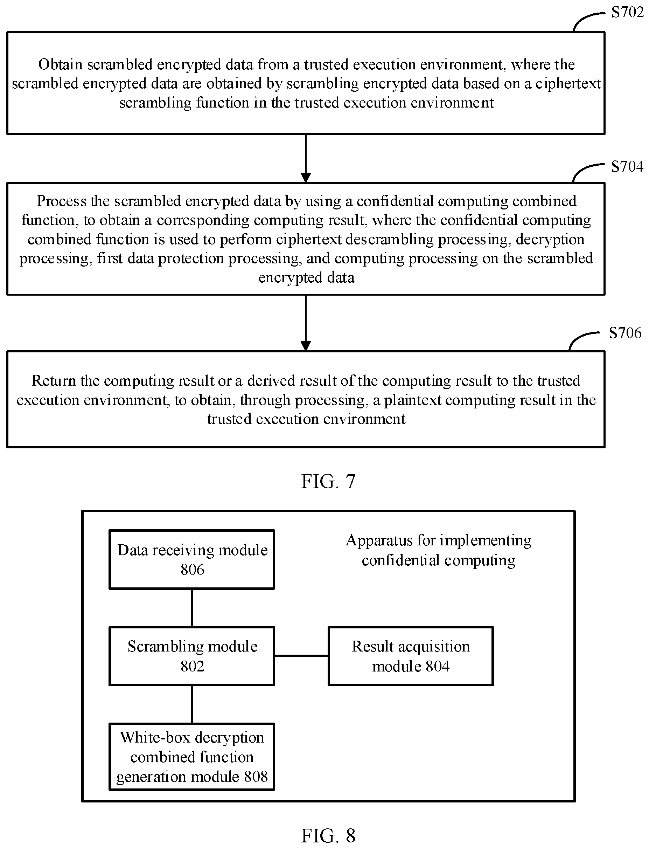

FIG. 7 is a schematic flowchart of a method for implementing confidential computing, according to an example embodiment of this specification. The method can be applied to a GPU mounted on a host. In a technical solution of this embodiment, the GPU needs to cooperate with a trusted execution environment to implement confidential computing. The trusted execution environment can be constructed based on software and hardware. For example, hardware configured to construct the trusted execution environment can include an expansion card inserted into a device body of the host, or a processor and a memory mounted on the device body of the host. As shown in FIG. 7, the method for implementing confidential computing includes the following steps.

S702: Obtain scrambled encrypted data from the trusted execution environment, where the scrambled encrypted data are obtained by scrambling encrypted data based on a ciphertext scrambling function in the trusted execution environment.

S704: Process the scrambled encrypted data by using a confidential computing combined function, to obtain a corresponding computing result, where the confidential computing combined function is used to perform ciphertext descrambling processing, decryption processing, first data protection processing, and computing processing on the scrambled encrypted data.

Because a computing function is mixed in the confidential computing combined function, the GPU can directly obtain the computing result by processing the scrambled encrypted data by using the confidential computing combined function.

S706: Return the computing result or a derived result of the computing result to the trusted execution environment, to obtain, through processing, a plaintext computing result in the trusted execution environment.

The embodiment shown in FIG. 7 describes a specific implementation process of the technical solution of the specification from a perspective of the GPU. The technical solution of the specification corresponds to the technical solution from a perspective of the trusted execution environment in the embodiment shown in FIG. 6. The GPU cooperates with the trusted execution environment to implement a complete confidential computing process. All descriptions related to the trusted execution environment in an operation process of generating and managing a confidential computing combined function, a computing result, etc. in the embodiment shown in FIG. 6 are also applicable to the embodiment shown in FIG. 7, and are not described here again.

Corresponding to the method embodiments shown in FIG. 6 and FIG. 7, this specification further provides some embodiments of a system for implementing confidential computing. For details, references can be made to the diagrams of the system architecture shown in FIG. 5a and FIG. 5b. The system includes a trusted execution environment and a GPU. In a process of implementing confidential computing, the trusted execution environment is used to: scramble encrypted data based on a ciphertext scrambling function, and send scrambled encrypted data to the GPU. Then, the trusted execution environment obtains a computing result or a derived result of the computing result from the GPU, and processes the computing result or the derived result of the computing result to obtain a plaintext computing result. The GPU is configured to: process the scrambled encrypted data by using a confidential computing combined function to obtain a corresponding computing result, and return the computing result or the derived result of the computing result to the trusted execution environment. The confidential computing combined function is used to perform ciphertext descrambling processing, decryption processing, first data protection processing, and computing processing on the scrambled encrypted data.

An apparatus for constructing the trusted execution environment can be mounted on an electronic device. The apparatus can include a processor and a memory configured to store processor-executable instructions. The processor reads the corresponding executable instructions from the memory for running, so that the apparatus cooperates with the GPU mounted on the electronic device to implement the above-mentioned embodiment of the method for implementing confidential computing. Certainly, in addition to software implementations, another implementation is not excluded in one or more embodiments of this specification, for example, a logic device or a combination of hardware and software. In other words, an execution body of the following processing process is not limited to logical units, and can be hardware or a logic device.

Similarly, the GPU mounted on the electronic device can also include a processor and a memory configured to store processor-executable instructions. The processor reads the corresponding executable instructions from the memory for running, so that the GPU cooperates with the apparatus that is for constructing the trusted execution environment and mounted on the electronic device, to implement the above-mentioned embodiment of the method for implementing confidential computing.

Corresponding to the above-mentioned embodiment of the method for implementing confidential computing, this specification further provides some embodiments of an apparatus for implementing confidential computing.

FIG. 8 is a schematic diagram of a structure of an apparatus for implementing confidential computing, according to an example embodiment of this specification. As shown in FIG. 8, the apparatus can be applied to a trusted execution environment. In a software implementation, the apparatus can include a scrambling module 802 and a result acquisition module 804.

The scrambling module 802 is configured to: scramble encrypted data based on a ciphertext scrambling function in the trusted execution environment, and send scrambled encrypted data to a GPU, so that the GPU processes the scrambled encrypted data by using a target white-box decryption combined function, and obtains, through computing, a corresponding computing result by using obtained processed data, where the target white-box decryption combined function is used to perform ciphertext descrambling processing, decryption processing, and first data protection processing on the scrambled encrypted data.

The result acquisition module 804 is configured to: obtain the computing result or a derived result of the computing result, and perform processing in the trusted execution environment to obtain a plaintext computing result.

Optionally, the trusted execution environment is constructed based on an expansion card inserted into a device body of a host, or the trusted execution environment is constructed based on a processor mounted on the device body of the host.

Optionally, the apparatus further includes: a data receiving module 806, configured to: receive the encrypted data sent by a data sender, where the encrypted data are obtained by the data sender by encrypting raw data based on a shared key negotiated by the data sender and the trusted execution environment; and encrypt the plaintext computing result by using the shared key and return the plaintext computing result to the data sender.

Optionally, the target white-box decryption combined function is recorded in a decryption look-up table parameter, the decryption look-up table parameter further records a candidate white-box decryption combined function corresponding to a candidate key, and the candidate key is different from a key used by the encrypted data. The decryption look-up table parameter is used by the GPU to search for the target white-box decryption combined function, so that the GPU processes the scrambled encrypted data by using the target white-box decryption combined function.

Optionally, the apparatus further includes: a white-box decryption combined function generation module 808, configured to: generate the target white-box decryption combined function in the trusted execution environment; and provide the target white-box decryption combined function to the GPU, so that the GPU processes the scrambled encrypted data by using the target white-box decryption combined function.

Optionally, the target white-box decryption combined function is stored in the host, and the white-box decryption combined function generation module 808 is specifically configured to send a distribution indication for the target white-box decryption combined function to the host, so that the host sends the target white-box decryption combined function to the GPU in response to the distribution indication.

Optionally, the first data protection processing includes at least one of the following: plaintext scrambling processing, homomorphic encryption processing, or non-homomorphic encryption processing.

Optionally, when the processed data are computed by using an original computing function to obtain the computing result, data protection is performed on the computing result by using a first data protection solution, and the first data protection solution is implemented through the first data protection processing; and when the processed data are computed by using a white-box computing combined function of the original computing function and a task protection function to obtain the computing result, data protection is performed on the computing result by using any one of the following data protection solutions: the first data protection solution, or a combined solution of the first data protection solution and another data protection solution formed based on the task protection function.

Optionally, the derived result is obtained by the GPU by performing second data protection processing on the computing result, and the derived result uses another data protection solution different from a data protection solution used for the computing result, or superimposes the another data protection solution on the data protection solution used for the computing result.

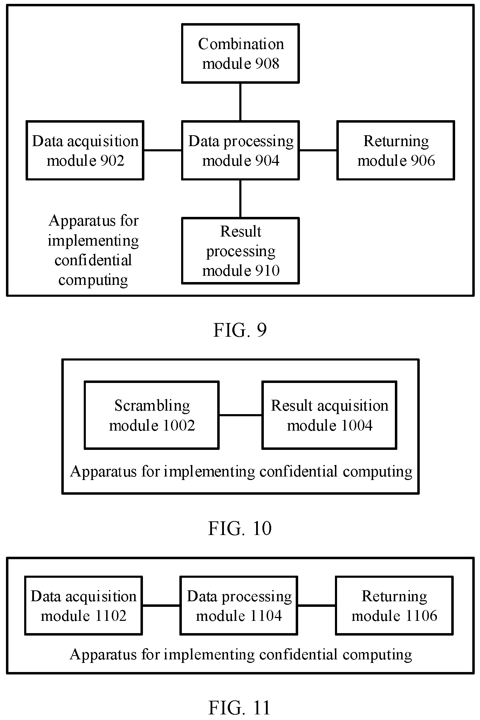

FIG. 9 is a schematic diagram of a structure of an apparatus for implementing confidential computing, according to an example embodiment of this specification. As shown in FIG. 9, the apparatus can be applied to a GPU mounted on a host. In a software implementation, the apparatus can include a data acquisition module 902, a data processing module 904, and a returning module 906.

The data acquisition module 902 is configured to obtain scrambled encrypted data from a trusted execution environment and a target computing function for the scrambled encrypted data, where the scrambled encrypted data are obtained by scrambling encrypted data based on a ciphertext scrambling function in the trusted execution environment.

The data processing module 904 is configured to: process the scrambled encrypted data by using a target white-box decryption combined function, and run the target computing function for obtained processed data to obtain a corresponding computing result, where the target white-box decryption combined function is used to perform ciphertext descrambling processing, decryption processing, and first data protection processing on the scrambled encrypted data.

The returning module 906 is configured to return the computing result or a derived result of the computing result to the trusted execution environment for processing in the trusted execution environment to obtain a plaintext computing result.

Optionally, the first data protection processing includes at least one of the following: plaintext scrambling processing, homomorphic encryption processing, or non-homomorphic encryption processing.

Optionally, the apparatus further includes: a combination module 908, configured to combine the target computing function with a task protection function to obtain a white-box computing combined function.

The data processing module 904 is specifically configured to run the white-box computing combined function for the processed data.

Optionally, the white-box computing combined function is recorded in a task look-up table parameter, the task look-up table parameter further records a candidate white-box computing combined function corresponding to a candidate computing function, and the candidate computing function is different from the target computing function.

Optionally, the apparatus further includes: a result processing module 910, configured to perform second data protection processing on the computing result to obtain the derived result, where the derived result uses another data protection solution different from a data protection solution used for the computing result, or superimposes the another data protection solution on the data protection solution used for the computing result.

FIG. 10 is a schematic diagram of a structure of an apparatus for implementing confidential computing, according to an example embodiment of this specification. As shown in FIG. 10, the apparatus can be applied to a trusted execution environment. In a software implementation, the apparatus can include a scrambling module 1002 and a result acquisition module 1004.

The scrambling module 1002 is configured to: scramble encrypted data based on a ciphertext scrambling function in the trusted execution environment, and send scrambled encrypted data to a GPU, so that the GPU processes the scrambled encrypted data by using a confidential computing combined function, to obtain a corresponding computing result, where the confidential computing combined function is used to perform ciphertext descrambling processing, decryption processing, first data protection processing, and computing processing on the scrambled encrypted data.

The result acquisition module 1004 is configured to: obtain the computing result or a derived result of the computing result, and perform processing in the trusted execution environment to obtain a plaintext computing result.

FIG. 11 is a schematic diagram of a structure of an apparatus for implementing confidential computing, according to an example embodiment of this specification. As shown in FIG. 11, the apparatus can be applied to a GPU mounted on a host. In a software implementation, the apparatus can include a data acquisition module 1102, a data processing module 1104, and a returning module 1106.

The data acquisition module 1102 is configured to obtain scrambled encrypted data from a trusted execution environment, where the scrambled encrypted data are obtained by scrambling encrypted data based on a ciphertext scrambling function in the trusted execution environment.

The data processing module 1104 is configured to process the scrambled encrypted data by using a confidential computing combined function, to obtain a corresponding computing result, where the confidential computing combined function is used to perform ciphertext descrambling processing, decryption processing, first data protection processing, and computing processing on the scrambled encrypted data.

The returning module 1106 is configured to return the computing result or a derived result of the computing result to the trusted execution environment for processing in the trusted execution environment to obtain a plaintext computing result.

For details about an implementation process of functions of modules in the apparatus for implementing confidential computing, references can be made to an implementation process of corresponding steps in the above-mentioned method. Details are omitted here for simplicity.

The apparatus embodiment basically corresponds to the method embodiment. Therefore, for related parts, references can be made to some descriptions in the method embodiment. The above-mentioned apparatus embodiment is merely an example. The units described as separate parts can or cannot be physically separate, and parts displayed as units can or cannot be physical units, can be located in one place, or can be distributed on a plurality of network units. Some or all of the modules can be selected based on an actual need to achieve the objectives of the solutions in this specification. A person of ordinary skill in the art can understand and implement the solutions without paying creative efforts.

The apparatus or module illustrated in the above-mentioned embodiment can be specifically implemented by a computer chip or an entity, or implemented by a product having a certain function. A typical implementation device is a computer, and a specific form of the computer can be a personal computer, a laptop computer, a cellular phone, a camera phone, a smart phone, a personal digital assistant, a media player, a navigation device, an e-mail transceiver device, a game console, a tablet computer, a wearable device, or a combination of any of these devices.

In a typical configuration, the computer includes one or more processors, including a processor (CPU) and a graphics processing unit (GPU), an input/output interface, a network interface, and a memory. The processor is configured to compute and emulate, and the graphics processing unit is configured to output a high-quality three-dimensional image.

The memory may be in a form like a non-permanent memory, a random access memory (RAM), and/or a nonvolatile memory in a computer-readable medium, for example, a read-only memory (ROM) or a flash memory (flash RAM). The memory is an example of the computer-readable medium.

Computer-readable media, including permanent and non-permanent media and removable and non-removable media, can be implemented by any method or technology for information storage. The information can be computer-readable instructions, a data structure, a program module, or other data. Examples of the computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic disk storage, a quantum memory, a graphene-based storage medium, another magnetic storage device, or any other non-transmission medium. The computer storage medium can be configured to store information that can be accessed by a computing device. Based on the definition in this specification, the computer-readable medium does not include transitory media (transitory media) such as a modulated data signal and carrier.

Corresponding to the above-mentioned embodiment of the method for implementing confidential computing, this application further provides a computer-readable storage medium. The computer-readable storage medium stores computer instructions, and the instructions are executed by a processor to implement the steps of the method for implementing confidential computing in any one of the above-mentioned embodiments.

Correspondingly, some embodiments of this specification further provide a computer program product. The computer program product includes a computer program and/or instructions, and the computer program and/or the instructions are executed by a processor to implement the steps of the method for implementing confidential computing in any one of the above-mentioned embodiments.

Similarly, although operations are depicted in a particular order in the accompanying drawings, it should not be understood as requiring these operations to be performed in the particular order shown, or performed successively, or requiring all illustrative operations to be performed to achieve the desired results. In some cases, multi-tasking and concurrent processing may be advantageous. In addition, separation of the system modules and components in some embodiments described above should not be understood as requiring such separation in all embodiments, and it should be understood that the described program components and systems can usually be integrated together in a single software product or encapsulated into a plurality of software products.

Therefore, some specific embodiments of the subject matters have been described. In addition, the processing depicted in the accompanying drawings is not necessarily performed in the particular order shown, or performed successively to achieve the desired results. In some implementations, multi-tasking and concurrent processing may be advantageous.

The above-mentioned descriptions are merely some example embodiments of this specification, but are not intended to limit this specification. Any modification, equivalent replacement, or improvement made without departing from the spirit and principle of this specification shall fall within the protection scope of this specification.

**EXAMPLES**

1. A method for implementing confidential computing, wherein the method comprises:

scrambling encrypted data based on a ciphertext scrambling function in a trusted execution environment, and sending scrambled encrypted data to a GPU, so that the GPU processes the scrambled encrypted data by using a target white-box decryption combined function, and obtains, through computing, a corresponding computing result by using obtained processed data, wherein the target white-box decryption combined function is used to perform ciphertext descrambling processing, decryption processing, and first data protection processing on the scrambled encrypted data; and

obtaining the computing result or a derived result of the computing result, and performing processing in the trusted execution environment to obtain a plaintext computing result.

2. The method according to example 1, wherein the trusted execution environment is constructed based on an expansion card inserted into a device body of a host, or the trusted execution environment is constructed based on a processor mounted on the device body of the host.

3. The method according to example 1, further comprising:

receiving the encrypted data sent by a data sender, wherein the encrypted data are obtained by the data sender by encrypting raw data based on a shared key negotiated by the data sender and the trusted execution environment; and

encrypting the plaintext computing result by using the shared key and returning the plaintext computing result to the data sender.

4. The method according to example 1, wherein the target white-box decryption combined function is recorded in a decryption look-up table parameter, the decryption look-up table parameter further records a candidate white-box decryption combined function corresponding to a candidate key, and the candidate key is different from a key used by the encrypted data; and

the decryption look-up table parameter is used by the GPU to search for the target white-box decryption combined function, so that the GPU processes the scrambled encrypted data by using the target white-box decryption combined function.

5. The method according to example 1, further comprising:

generating the target white-box decryption combined function in the trusted execution environment; and
providing the target white-box decryption combined function to the GPU, so that the GPU processes the scrambled encrypted data by using the target white-box decryption combined function.

6. The method according to example 5, wherein the target white-box decryption combined function is stored in a host, and the providing the target white-box decryption combined function to the GPU comprises:
sending a distribution indication for the target white-box decryption combined function to the host, so that the host sends the target white-box decryption combined function to the GPU in response to the distribution indication.

7. The method according to example 1, wherein the first data protection processing comprises at least one of the following: plaintext scrambling processing, homomorphic encryption processing, or non-homomorphic encryption processing.

8. The method according to example 1, wherein

when the processed data are computed by using an original computing function to obtain the computing result, data protection is performed on the computing result by using a first data protection solution, and the first data protection solution is implemented through the first data protection processing; and
when the processed data are computed by using a white-box computing combined function of the original computing function and a task protection function to obtain the computing result, data protection is performed on the computing result by using any one of the following data protection solutions: the first data protection solution, or a combined solution of the first data protection solution and another data protection solution formed based on the task protection function.

9. The method according to example 1 or 8, wherein the derived result is obtained by the GPU by performing second data protection processing on the computing result, and the derived result uses another data protection solution different from a data protection solution used for the computing result, or superimposes the another data protection solution on the data protection solution used for the computing result.

10. A method for implementing confidential computing, wherein the method comprises:

obtaining scrambled encrypted data from a trusted execution environment and a target computing function for the scrambled encrypted data, wherein the scrambled encrypted data are obtained by scrambling encrypted data based on a ciphertext scrambling function in the trusted execution environment;
processing the scrambled encrypted data by using a target white-box decryption combined function, and running the target computing function for obtained processed data to obtain a corresponding computing result, wherein the target white-box decryption combined function is used to perform ciphertext descrambling processing, decryption processing, and first data protection processing on the scrambled encrypted data; and
returning the computing result or a derived result of the computing result to the trusted execution environment for processing in the trusted execution environment to obtain a plaintext computing result.

11. The method according to example 10, wherein the first data protection processing comprises at least one of the following: plaintext scrambling processing, homomorphic encryption processing, or non-homomorphic encryption processing.

12. The method according to example 10, wherein the method further comprises:

combining the target computing function with a task protection function to obtain a white-box computing combined function; and
the running the target computing function for obtained processed data comprises: running the white-box computing combined function for the processed data.

13. The method according to example 12, wherein the white-box computing combined function is recorded in a task look-up table parameter, the task look-up table parameter further records a candidate white-box computing combined function corresponding to a candidate computing function, and the candidate computing function is different from the target computing function.

14. The method according to example 10, further comprising:
performing second data protection processing on the computing result to obtain the derived result, wherein the derived result uses another data protection solution different from a data protection solution used for the computing result, or superimposes the another data protection solution on the data protection solution used for the computing result.

15. A system for implementing confidential computing, comprising a trusted execution environment and a GPU, wherein

the trusted execution environment is used to: scramble encrypted data based on a ciphertext scrambling function, send scrambled encrypted data to the GPU, obtain a computing result or a derived result of the computing result from the GPU, and process the computing result or the derived result of the computing result to obtain a plaintext computing result; and
the GPU is configured to: process the scrambled encrypted data by using a target white-box decryption combined function, obtain, through computing, the corresponding computing result by using obtained processed data, and return the computing result or the derived result of the computing result to the trusted execution environment, wherein the target white-box decryption combined function is used to perform ciphertext descrambling processing, decryption processing, and first data protection processing on the scrambled encrypted data.

16. The system according to example 15, wherein the first data protection processing comprises at least one of the following: plaintext scrambling processing, homomorphic encryption processing, or non-homomorphic encryption processing.

17. The system according to example 15, wherein when the processed data are computed by using an original computing function to obtain the computing result, data protection is performed on the computing result by using a first data protection solution, and the first data protection solution is implemented through the first data protection processing; and
when the processed data are computed by using a white-box computing combined function of the original computing function and a task protection function to obtain the computing result, data protection is performed on the computing result by using any one of the following data protection solutions: the first data protection solution, or a combined solution of the first data protection solution and another data protection solution formed based on the task protection function.

18. The system according to example 15 or 17, wherein the derived result is obtained by the GPU by performing second data protection processing on the computing result, and the derived result uses another data protection solution different from a data protection solution used for the computing result, or superimposes the another data protection solution on the data protection solution used for the computing result.

19. A method for implementing confidential computing, wherein the method comprises:

scrambling encrypted data based on a ciphertext scrambling function in a trusted execution environment, and sending scrambled encrypted data to a GPU, so that the GPU processes the scrambled encrypted data by using a confidential computing combined function, to obtain a corresponding computing result, wherein the confidential computing combined function is used to perform ciphertext descrambling processing, decryption processing, first data protection processing, and computing processing on the scrambled encrypted data; and
obtaining the computing result or a derived result of the computing result, and performing processing in the trusted execution environment to obtain a plaintext computing result.

20. A method for implementing confidential computing, wherein the method comprises:

obtaining scrambled encrypted data from a trusted execution environment, wherein the scrambled encrypted data are obtained by scrambling encrypted data based on a ciphertext scrambling function in the trusted execution environment;
processing the scrambled encrypted data by using a confidential computing combined function, to obtain a corresponding computing result, wherein the confidential computing combined function is used to perform ciphertext descrambling processing, decryption processing, first data protection processing, and computing processing on the scrambled encrypted data; and

returning the computing result or a derived result of the computing result to the trusted execution environment for processing in the trusted execution environment to obtain a plaintext computing result.

21. A system for implementing confidential computing, comprising a trusted execution environment and a GPU, wherein

the trusted execution environment is used to: scramble encrypted data based on a ciphertext scrambling function, send scrambled encrypted data to the GPU, obtain a computing result or a derived result of the computing result from the GPU, and process the computing result or the derived result of the computing result to obtain a plaintext computing result; and

the GPU is configured to: process the scrambled encrypted data by using a confidential computing combined function, to obtain the corresponding computing result, and return the computing result or the derived result of the computing result to the trusted execution environment, wherein the confidential computing combined function is used to perform ciphertext descrambling processing, decryption processing, first data protection processing, and computing processing on the scrambled encrypted data.

22. An apparatus for implementing confidential computing, comprising:

a processor; and

a memory configured to store processor-executable instructions, wherein

the processor runs the executable instructions to implement the method according to any one of examples 1 to 14, 19, and 20.

23. A computer-readable storage medium, wherein the computer-readable storage medium stores computer instructions, and when the instructions are executed by a processor, the steps of the method according to any one of examples 1 to 14, 19, and 20 is implemented.

24. A computer program product, comprising a computer program and/or instructions, wherein when the computer program and/or the instructions are executed by a processor, the steps of the method according to any one of examples 1 to 14, 19, and 20 is implemented.

## Claims

1. A method for implementing confidential computing, wherein the method comprises:

scrambling encrypted data based on a ciphertext scrambling function in a trusted execution environment, and sending scrambled encrypted data to a GPU, so that the GPU processes the scrambled encrypted data by using a target white-box decryption combined function, and obtains, through computing, a corresponding computing result by using obtained processed data, wherein the target white-box decryption combined function is used to perform ciphertext descrambling processing, decryption processing, and first data protection processing on the scrambled encrypted data; and

obtaining the computing result or a derived result of the computing result, and performing processing in the trusted execution environment to obtain a plaintext computing result.

2. The method according to claim 1, wherein

the trusted execution environment is constructed based on an expansion card inserted into a device body of a host, or the trusted execution environment is constructed based on a processor mounted on the device body of the host; and/or

the method further comprises:

receiving the encrypted data sent by a data sender, wherein the encrypted data are obtained by the data sender by encrypting raw data based on a shared key negotiated by the data sender and the trusted execution environment; and

encrypting the plaintext computing result by using the shared key and returning the plaintext computing result to the data sender; and/or
the target white-box decryption combined function is recorded in a decryption look-up table parameter, the decryption look-up table parameter further records a candidate white-box decryption combined function corresponding to a candidate key, and the candidate key is different from a key used by the encrypted data; and
the decryption look-up table parameter is used by the GPU to search for the target white-box decryption combined function, so that the GPU processes the scrambled encrypted data by using the target white-box decryption combined function.

3. The method according to any one of claims 1 or 2, further comprising:

generating the target white-box decryption combined function in the trusted execution environment; and
providing the target white-box decryption combined function to the GPU, so that the GPU processes the scrambled encrypted data by using the target white-box decryption combined function; optionally
wherein the target white-box decryption combined function is stored in a host, and the providing the target white-box decryption combined function to the GPU comprises:
sending a distribution indication for the target white-box decryption combined function to the host, so that the host sends the target white-box decryption combined function to the GPU in response to the distribution indication.

4. The method according to any one of claims 1 to 3, wherein the first data protection processing comprises at least one of the following: plaintext scrambling processing, homomorphic encryption processing, or non-homomorphic encryption processing.

5. The method according to any one of claims 1 to 4, wherein

when the processed data are computed by using an original computing function to obtain the computing result, data protection is performed on the computing result by using a first data protection solution, and the first data protection solution is implemented through the first data protection processing; and
when the processed data are computed by using a white-box computing combined function of the original computing function and a task protection function to obtain the computing result, data protection is performed on the computing result by using any one of the following data protection solutions: the first data protection solution, or a combined solution of the first data protection solution and another data protection solution formed based on the task protection function.

6. The method according to claim 1 or 5, wherein the derived result is obtained by the GPU by performing second data protection processing on the computing result, and the derived result uses another data protection solution different from a data protection solution used for the computing result, or superimposes the another data protection solution on the data protection solution used for the computing result.

7. A method for implementing confidential computing, wherein the method comprises:

obtaining scrambled encrypted data from a trusted execution environment and a target computing function for the scrambled encrypted data, wherein the scrambled encrypted data are obtained by scrambling encrypted data based on a ciphertext scrambling function in the trusted execution environment;
processing the scrambled encrypted data by using a target white-box decryption combined function, and running the target computing function for obtained processed data to obtain a corresponding computing result, wherein the target white-box decryption combined function is used to perform ciphertext descrambling processing, decryption processing, and first data protection processing on the scrambled encrypted data; and
returning the computing result or a derived result of the computing result to the trusted execution environment for processing in the trusted execution environment to obtain a plaintext computing result.

8. The method according to claim 7, wherein

the first data protection processing comprises at least one of the following: plaintext scrambling processing, homomorphic encryption processing, or non-homomorphic encryption processing; and/or
the method further comprises:

combining the target computing function with a task protection function to obtain a white-box computing combined function; and

the running the target computing function for obtained processed data comprises: running the white-box computing combined function for the processed data, optionally

wherein the white-box computing combined function is recorded in a task look-up table parameter, the task look-up table parameter further records a candidate white-box computing combined function corresponding to a candidate computing function, and the candidate computing function is different from the target computing function; and/or

the method further comprises:

performing second data protection processing on the computing result to obtain the derived result, wherein the derived result uses another data protection solution different from a data protection solution used for the computing result, or superimposes the another data protection solution on the data protection solution used for the computing result.

9.  A system for implementing confidential computing, comprising a trusted execution environment and a GPU, wherein

the trusted execution environment is used to: scramble encrypted data based on a ciphertext scrambling function, send scrambled encrypted data to the GPU, obtain a computing result or a derived result of the computing result from the GPU, and process the computing result or the derived result of the computing result to obtain a plaintext computing result; and

the GPU is configured to: process the scrambled encrypted data by using a target white-box decryption combined function, obtain, through computing, the corresponding computing result by using obtained processed data, and return the computing result or the derived result of the computing result to the trusted execution environment, wherein the target white-box decryption combined function is used to perform ciphertext descrambling processing, decryption processing, and first data protection processing on the scrambled encrypted data; optionally wherein the first data protection processing comprises at least one of the following: plaintext scrambling processing, homomorphic encryption processing, or non-homomorphic encryption processing.

10.  The system according to claim 9, wherein,

when the processed data are computed by using an original computing function to obtain the computing result, data protection is performed on the computing result by using a first data protection solution, and the first data protection solution is implemented through the first data protection processing; and

when the processed data are computed by using a white-box computing combined function of the original computing function and a task protection function to obtain the computing result, data protection is performed on the computing result by using any one of the following data protection solutions: the first data protection solution, or a combined solution of the first data protection solution and another data protection solution formed based on the task protection function; and/or wherein

the derived result is obtained by the GPU by performing second data protection processing on the computing result, and the derived result uses another data protection solution different from a data protection solution used for the computing result, or superimposes the another data protection solution on the data protection solution used for the computing result.

11.  A method for implementing confidential computing, wherein the method comprises:

scrambling encrypted data based on a ciphertext scrambling function in a trusted execution environment, and sending scrambled encrypted data to a GPU, so that the GPU processes the scrambled encrypted data by using a confidential computing combined function, to obtain a corresponding computing result, wherein the confidential computing combined function is used to perform ciphertext descrambling processing, decryption processing, first data protection processing, and computing processing on the scrambled encrypted data; and

obtaining the computing result or a derived result of the computing result, and performing processing in the trusted execution environment to obtain a plaintext computing result.

12.  A method for implementing confidential computing, wherein the method comprises:

obtaining scrambled encrypted data from a trusted execution environment, wherein the scrambled encrypted data are obtained by scrambling encrypted data based on a ciphertext scrambling function in the trusted execution environment;

processing the scrambled encrypted data by using a confidential computing combined function, to obtain a corresponding computing result, wherein the confidential computing combined function is used to perform ciphertext descrambling processing, decryption processing, first data protection processing, and computing processing on the scrambled encrypted data; and

returning the computing result or a derived result of the computing result to the trusted execution environment for processing in the trusted execution environment to obtain a plaintext computing result.

13. A system for implementing confidential computing, comprising a trusted execution environment and a GPU, wherein

the trusted execution environment is used to: scramble encrypted data based on a ciphertext scrambling function, send scrambled encrypted data to the GPU, obtain a computing result or a derived result of the computing result from the GPU, and process the computing result or the derived result of the computing result to obtain a plaintext computing result; and

the GPU is configured to: process the scrambled encrypted data by using a confidential computing combined function, to obtain the corresponding computing result, and return the computing result or the derived result of the computing result to the trusted execution environment, wherein the confidential computing combined function is used to perform ciphertext descrambling processing, decryption processing, first data protection processing, and computing processing on the scrambled encrypted data.

14. An apparatus for implementing confidential computing, the apparatus comprising:

a processor; and

a memory configured to store processor-executable instructions, wherein

the processor runs the executable instructions to perform the method according to any one of claims 1 to 8, 11, and 12.

15. A computer program product, comprising a computer program and/or instructions, wherein when the computer program and/or the instructions are executed by a processor, the steps of the method according to any one of claims 1 to 8, 11, and 12 is performed.

FIG. 1a

FIG. 1b

S202

Scramble encrypted data based on a ciphertext scrambling function in a trusted execution environment, and send scrambled encrypted data to a GPU, so that the GPU processes the scrambled encrypted data by using a target white-box decryption combined function, and obtains, through computing, a corresponding computing result by using obtained processed data, where the target white-box decryption combined function is used to perform ciphertext descrambling processing, decryption processing, and first data protection processing on the scrambled encrypted data

S204

Obtain the computing result or a derived result of the computing result, and perform processing in the trusted execution environment to obtain a plaintext computing result

FIG. 2

S302

Obtain scrambled encrypted data from a trusted execution environment and a target computing function for the scrambled encrypted data, where the scrambled encrypted data are obtained by scrambling encrypted data based on a ciphertext scrambling function in the trusted execution environment

S304

Process the scrambled encrypted data by using a target white-box decryption combined function, and run the target computing function for obtained processed data to obtain a corresponding computing result, where the target white-box decryption combined function is used to perform ciphertext descrambling processing, decryption processing, and first data protection processing on the scrambled encrypted data

S306

Return the computing result or a derived result of the computing result to the trusted execution environment, to obtain, through processing, a plaintext computing result in the trusted execution environment

FIG. 3

Remote client device | Host | Expansion card (TEE) | GPU

S401: Remote authentication and key negotiation

S402: Send encrypted data

S403: Generate a bijective function, a target white-box decryption combined function, and a white-box encryption combined function

S404: Send a look-up table parameter

S405: Scramble the encrypted data

S406: Send scrambled encrypted data

S407: Send a distribution indication

S408: Send a library file

S409: Process and compute the scrambled encrypted data

S410: Perform second data protection processing on a computing result to obtain a derived result

S411: Send the derived result

S412: Process the derived result to obtain a plaintext computing result, and encrypt the plaintext computing result

S413: Send an encrypted computing result

S414: Decrypt the encrypted computing result to obtain the plaintext computing result

FIG. 4

FIG. 5a

FIG. 5b

S602

Scramble encrypted data based on a ciphertext scrambling function in a trusted execution environment, and send scrambled encrypted data to a GPU, so that the GPU processes the scrambled encrypted data by using a confidential computing combined function, to obtain a corresponding computing result, where the confidential computing combined function is used to perform ciphertext descrambling processing, decryption processing, first data protection processing, and computing processing on the scrambled encrypted data

S604

Obtain the computing result or a derived result of the computing result, and perform processing in the trusted execution environment to obtain a plaintext computing result

FIG. 6

S702

Obtain scrambled encrypted data from a trusted execution environment, where the scrambled encrypted data are obtained by scrambling encrypted data based on a ciphertext scrambling function in the trusted execution environment

S704

Process the scrambled encrypted data by using a confidential computing combined function, to obtain a corresponding computing result, where the confidential computing combined function is used to perform ciphertext descrambling processing, decryption processing, first data protection processing, and computing processing on the scrambled encrypted data

S706

Return the computing result or a derived result of the computing result to the trusted execution environment, to obtain, through processing, a plaintext computing result in the trusted execution environment

FIG. 7

Apparatus for implementing confidential computing

Data receiving module 806

Scrambling module 802

Result acquisition module 804

White-box decryption combined function generation module 808

FIG. 8

Combination
module 908

Data acquisition
module 902

Data processing
module 904

Returning
module 906

Apparatus for
implementing
confidential
computing

Result
processing
module 910

**FIG. 9**

Scrambling
module 1002

Result acquisition
module 1004

Apparatus for implementing confidential computing

**FIG. 10**

Data acquisition
module 1102

Data processing
module 1104

Returning
module 1106

Apparatus for implementing confidential computing

**FIG. 11**

|  | Europäisches Patentamt<br>European Patent Office<br>Office européen des brevets | **EUROPEAN SEARCH REPORT** | **Application Number**<br>**EP 25 17 4548** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 591 098 B (UNIV ZHEJIANG) 26 March 2024 (2024-03-26) * paragraph [0007] - paragraph [0038] *<br>----- | 1-15 | INV.<br>G06F21/53 |
| A | LIU PINGLAN ET AL: "Integrating Homomorphic Encryption and Trusted Execution Technology for Autonomous and Confidential Model Refining in Cloud", 2023 IEEE 16TH INTERNATIONAL CONFERENCE ON CLOUD COMPUTING (CLOUD), IEEE, 2 July 2023 (2023-07-02), pages 529-539, XP034430946, DOI: 10.1109/CLOUD60044.2023.00071 [retrieved on 2023-09-25] * section II. and III. *<br>----- | 1-15 | |

|  |  |
|---|---|
|  | **TECHNICAL FIELDS SEARCHED (IPC)**<br>G06F<br>H04L |

The present search report has been drawn up for all claims

| Place of search | Date of completion of the search | Examiner |
|---|---|---|
| Munich | 2 September 2025 | Prins, Leendert |

EPO FORM 1503 03.82 (P04C01)

## ANNEX TO THE EUROPEAN SEARCH REPORT
## ON EUROPEAN PATENT APPLICATION NO.

EP 25 17 4548

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2025

| Patent document cited in search report | Publication date | Patent family member(s) | Publication date |
|---|---|---|---|
| CN 113591098 B | 26-03-2024 | NONE | |

EPO FORM P0459

For more details about this annex : see Official Journal of the European Patent Office, No. 12/82